# EUROPEAN PATENT APPLICATION

(11) **EP 3 079 374 A1**
(43) Date of publication of application: **12.10.2016**
(21) Application number: 14867243.9
(22) Date of filing: 02.12.2014
(51) Int. Cl.: H04N 21/83, H04N 21/4408

(54) **CONTENTS SECURITY METHOD AND ELECTRONIC APPARATUS FOR PROVIDING CONTENTS SECURITY FUNCTION**

(30) Priority: 03.12.2013 US 201361911198 P; 19.05.2014 KR 20140059958; 04.09.2014 KR 20140118021
(71) Applicant: Samsung Electronics Co., Ltd., Gyeonggi-do 16677 (KR)
(72) Inventor: KO, Hak-joo, Yongin-si Gyeonggi-do (KR); CHOI, In-kwon, Seongnam-si Gyeonggi-do (KR); KIM, Chan-yul, Bucheon-si Gyeonggi-do (KR); PARK, Min-woo, Yongin-si Gyeonggi-do (KR); WEY, Ho-cheon, Seongnam-si Gyeonggi-do 13600 (KR); LEE, Seung-bum, Hwaseong-si Gyeonggi-do (KR)
(74) Representative: Nederlandsch Octrooibureau
(86) International application number: PCT/KR2014/011702
(87) International publication number: WO 2015/084022

(57) **Abstract**

Provided are a content security method and an electronic apparatus for providing a content security function. The content security method according to an embodiment of the present invention includes: generating a security key used to decrypt security content; generating a security message based on the security key, content transmitter identification information, and content receiver identification information; generating the security content by encrypting content; and transmitting the security content and the security message to an external electronic apparatus.

## Description

### TECHNICAL FIELD

Various embodiments of the present invention relate to a content security method and an electronic apparatus for providing a content security function, and more particularly, to a content security method and an electronic apparatus for providing a content security function which may allow only an authorized user to decrypt and reproduce encrypted content.

### BACKGROUND ART

As computers, the Internet, etc. have recently rapidly developed, content that is obtained by creating various letters, symbols, voices, sounds, or images as computer-readable digital data has been distributed, and may be easily transmitted and received through wired and wireless communication.

A copy or a modification of original content may be easily made and may be easily distributed. Accordingly, although content providers who have spent a lot of time, money, creativity, and effort want to protect their own copyrights online or offline, easy copying and illegal distribution of content adversely affect the vitalization of the digital content market.

Accordingly, there is a demand for a content security method that may protect the copyright of a content provider and prevent content from being illegally copied and distributed.

### DETAILED DESCRIPTION OF THE INVENTION

### TECHNICAL PROBLEM

Various embodiments of the present invention may provide a content security method and an electronic apparatus for providing a content security function which may provide content only to an authorized user.

### TECHNICAL SOLUTION

A content security method according to an embodiment of the present invention may include generating a security key used to decrypt security content, generating a security message based on the security key, content transmitter identification information, and content receiver identification information, generating the security content by encrypting content, and transmitting the security content and the security message to an external electronic apparatus.

### ADVANTAGEOUS EFFECTS OF THE INVENTION

According to an embodiment of the present invention, since content may be provided to only an authorized user, content security may be strengthened. Also, since transmitter identification information and receiver identification information are not directly perceived, content security may be strengthened. Also, since authentication information is added by correcting only a header area of an existing content data packet, a format of the existing content data packet may be used.

### BRIEF DESCRIPTION OF THE DRAWINGS

FIG. 1 is a block diagram for explaining a security system when content is shared between electronic apparatuses according to an embodiment of the present invention.
FIG. 2 is a block diagram illustrating a configuration of an electronic apparatus according to an embodiment of the present invention, and FIGS. 3 through 5 are each a block diagram illustrating a configuration of a content security module according to an embodiment of the present invention.
FIG. 6 is a block diagram illustrating a configuration of an electronic apparatus according to an embodiment of the present invention.
FIG. 7 is a flowchart for explaining a content security method according to an embodiment of the present invention, FIG. 8 is a flowchart of an operation of a first electronic apparatus of FIG. 7, and FIG. 9 is a flowchart of an operation of a second electronic apparatus of FIG. 7.
FIG. 10 is a flowchart of a content security method according to an embodiment of the present invention.
FIG. 11 is a flowchart for explaining a content security method according to an embodiment of the present invention, FIG. 12 is a flowchart of an operation of the first electronic apparatus of FIG. 11, and FIG. 13 is a flowchart of an operation of the second electronic apparatus of FIG. 11.
FIG. 14 is a flowchart for explaining a content security method according to an embodiment of the present invention.
FIG. 15 is a detailed flowchart of operations S1170 and S1180 of FIG. 14.
FIGS. 16 and 17 are each a block diagram for explaining a content security method according to an embodiment of the present invention.
FIGS. 18A through 18C are views that are referred to when a content security method is described according to an embodiment of the present invention.
FIG. 19 is a view for explaining a method of setting security content according to an embodiment of the present invention.
FIGS. 20A through 23C are each a view for explaining a method of sharing security content according to an embodiment of the present invention.
FIG. 24 is a view for explaining a method of setting a user who is recognized in image content as a user who is to share security content according to an embodiment of the present invention.
FIGS. 25 and 26 are each a flowchart for explaining a content security method according to an embodiment of the present invention, FIG. 25 being a flowchart of an operation of the first electronic apparatus that transmits security content, and FIG. 26 being a flowchart of an operation of the second electronic apparatus that receives security content.
FIG. 27 is a view for explaining a method of setting security content in a wearable device according to an embodiment of the present invention.
FIGS. 28A and 28B are views for explaining a method of revoking security content shared by an electronic apparatus according to an embodiment of the present invention.

### BEST MODE

A content security method according to an embodiment of the present invention may include: generating a security key used to decrypt security content; generating a security message based on the security key, content transmitter identification information, and content receiver identification information; generating the security content by encrypting content; and transmitting the security content and the security message to an external electronic apparatus.

Each of the content transmitter identification information and the content receiver identification information according to an embodiment of the present invention may include at least one of a telephone number, an e-mail address, an identifier (ID), a pre-shared key, pre-shared identification information, and information used for a pre-shared identification information generation algorithm.

The generating of the security message according to an embodiment of the present invention may include generating the security message by performing a mathematical operation on the security key, the content transmitter identification information, and the content receiver identification information.

The content security method according to an embodiment of the present invention may further include adding the security message to the security content.

The content security method according to an embodiment of the present invention may further include receiving the content receiver identification information, wherein the transmitting of the security content and the security message to the external electronic apparatus includes transmitting the security content and the security message to an electronic apparatus corresponding to the content receiver identification information.

The content security method according to an embodiment of the present invention may further include setting position information for decrypting the security content into original content, wherein the generating of the security message includes generating the security message based on the security key and the position information.

The setting of the position information according to an embodiment of the present invention may include setting position information about a position where the content is generated as the position information for decrypting the security content into the original content.

The generating of the security message according to an embodiment of the present invention may include generating the security message based on the security key and user identification information corresponding to a user image included in the content.

The generating of the security message according to an embodiment of the present invention may include generating the security message based on user identification information tagged to the content.

The content security method according to an embodiment of the present invention may further include setting period information about a period during which the security content is shared, wherein the generating of the security message includes generating the security message based on the security key and the period information.

A content security method according to an embodiment of the present invention may include: obtaining, in an electronic apparatus, a security message and security content; extracting a security key based on the security message and user identification information of the electronic apparatus; and decrypting the security content based on the extracted security key.

The user identification information according to an embodiment of the present invention may include at least one of a telephone number, an e-mail address, an identifier (ID), a pre-shared key, pre-shared identification information, and information used for a pre-shared identification information generation algorithm.

The obtaining of the security content according to an embodiment of the present invention may include receiving the security content to which the security message is added and the obtaining of the security message further comprises extracting the security message from the security content to which the security message is added.

The extracting of the security key according to an embodiment of the present invention may include extracting the security key by performing a mathematical operation on the security message and the user identification information.

The content security method according to an embodiment of the present invention may further include receiving position information of the electronic apparatus, wherein the extracting of the security key includes extracting the security key based on the security message and the position information of the electronic apparatus.

The content security method according to an embodiment of the present invention may further include receiving current time information, wherein the extracting of the security key includes extracting the security key based on the security message and the current time information.

An electronic apparatus for providing a content security function according to an embodiment of the present invention may include: an authentication controller configured to generate a security key used to decrypt security content and generate a security message based on the security key, content transmitter identification information, and content receiver identification information; a security encoder configured to generate the security content by encrypting content; and a communicator configured to transmit the security content and the security message to an external electronic apparatus.

The authentication controller according to an embodiment of the present invention may generate the security message by performing a mathematical operation on the security key, the transmitter identification information, and the receiver identification information.

The security encoder according to an embodiment of the present invention may add the security message to the security content.

The electronic apparatus according to an embodiment of the present invention may further include an input device configured to receive the content receiver identification information, wherein the communicator transmits the security content and the security message to an electronic apparatus corresponding to the content receiver identification information.

The authentication controller according to an embodiment of the present invention may set position information for decrypting the security content into original content and generate the security message based on the security key and the set position information.

The authentication controller according to an embodiment of the present invention may set position information about a position where the content is generated as the position information for decrypting the security content into the original content.

The authentication controller according to an embodiment of the present invention may recognize a user image included in the content and generates the security message based on the security key and user identification information corresponding to the recognized user image.

The authentication controller according to an embodiment of the present invention may generate the security message based on user identification information tagged to the content.

The authentication controller according to an embodiment of the present invention may set period information about a period during which the security content is shared and generate the security message based on the security key and the set period information.

An electronic apparatus for providing a content security function according to an embodiment of the present invention may include: a communicator configured to receive a security message and security content; an authentication controller configured to extract a security key based on the security message and electronic apparatus user identification information; a security decoder configured to decrypt the security content based on the extracted security key; and a content reproducer configured to reproduce the decrypted security content.

When the security content to which the security message is added is received, the security decoder according to an embodiment of the present invention may extract the security message from the security content.

The authentication controller according to an embodiment of the present invention may extract the security key by performing a mathematical operation on the security message and the electronic apparatus user identification information.

The authentication controller according to an embodiment of the present invention may receive position information of the electronic apparatus and extract the security key based on the security message and the position information of the electronic apparatus.

The authentication controller according to an embodiment of the present invention may receive current time information and extract the security key based on the security message and the current time information.

### MODE OF THE INVENTION

Various embodiments of the present invention will now be described more fully with reference to the accompanying drawings. As the present invention allows for various changes and numerous embodiments, the various embodiments will be illustrated in the drawings and described in detail in the written description. However, this is not intended to limit the present invention to particular modes of practice, and it is to be appreciated that all changes, equivalents, and substitutes that do not depart from the spirit and technical scope of the present invention are encompassed in the present invention. Like reference numerals denote like elements in the drawings.

The expression "comprising" or "may include" that may be used in various embodiments of the present invention refers to the existence of a disclosed function, operation, or element, and one or more additional functions, operations, or elements are not limited. In the present specification, it is to be understood that the terms such as "including", "having", and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

In the present application, the expression "or" or "at least one of A or/and B" include any and all combinations of words enumerated together. For example, the expression "A or B" or "at least one of A or/and B" may include only A, may include only B, or may include both A and B.

It will be understood that, although the terms "1st", "2nd", "first", "second", etc. may be used herein to describe various elements, these elements should not be limited by these terms. For example, these terms do not limit the order of the elements and/or the importance thereof. These terms are only used to distinguish one element from another element. For example, a 1st user device and a 2nd user device are all user devices, and represent different user devices. Thus, a first element discussed below could be termed a second element, and similarly, a second element may be termed as a first element, without departing from the teachings of various embodiments of the present invention.

When an element is "connected" to or "accessed" by another element, it should be understood that any element may be directly connected to or accessed by another element or that a third element may also exist between the two elements. In contrast, when any element is "directly connected" to or "directly accessed" by another element, it should be understood that the third element does not exist between the two elements.

The terms employed in the present invention are used for describing specific examples, and do not intend to limit the spirit and scope of the various embodiments of the present invention. The expression of a singular number includes the expression of a plural number unless the context clearly dictates otherwise.

Unless defined otherwise, all terms used herein including technological or scientific terms have the same meaning as being generally understood by one of ordinary skill in the art. Terms as defined in a general dictionary should be interpreted as having meanings consistent with a contextual meaning of a related technology, and are not interpreted as having ideal or excessively formal meanings unless defined clearly herein.

An electronic apparatus may be an electronic apparatus including a content security method. For example, the electronic apparatus may include at least one of a smart phone, a tablet Personal Computer (PC), a mobile phone, a video phone, an electronic book (e-book) reader, a desktop PC, a laptop PC, a netbook computer, a Personal Digital Assistant (PDA), a Portable Multimedia Player (PMP), an MPEG Audio Layer 3 (MP3) player, a mobile medical instrument, a camera, and a wearable device (e.g., a Head-Mounted Display (HMD) such as electronic glasses, electronic clothes, an electronic bracelet, an electronic necklace, an electronic accessory, an electronic tattoo, or a smart watch).

According to some embodiments, the electronic apparatus may be a smart home appliance with a content security method. For example, the smart home appliance may include at least one of a television, a Digital Video Disk (DVD) player, an audio system, a refrigerator, an air conditioner, a cleaner, an oven, a microwave, a washing machine, an air cleaner, a set-top box, a TV box (e.g., Samsung HomeSync™, Apple TV™, or Google TV™), a game console, an electronic dictionary, an electronic locking system, a camcorder, and an electronic frame.

According to some embodiments, the electronic apparatus may include at least one of a variety of medical instruments (e.g., Magnetic Resonance Angiography (MRA), Magnetic Resonance Imaging (MRI), Computerized Tomography (CT), a scanning machine, or an ultrasound machine), a navigation device, a Global Positioning System (GPS) receiver, an Event Data Recorder (EDR), a Flight Data Recorder (FDR), a car infotainment device, electronic equipment for a ship (e.g., a navigation device for a ship or a gyrocompass), avionics, a security instrument, a car head unit, an industrial or household robot, an Automatic Teller Machine (ATM) of a financial institution, and a Point of Sale (POS) device of a vendor.

According to some embodiments, the electronic apparatus may include at least one of a part of furniture or building/structure, an electronic board, an electronic signature receiving device, a projector, and various metering instruments (e.g., a tap water, electricity, gas, or radio wave metering instrument). The electronic apparatus according to various embodiments of the present invention may be one or a combination of more of the aforementioned devices. Also, the electronic apparatus may be a flexible device. Also, it is understood that the electronic apparatus according to various embodiments of the present invention is not limited to the aforementioned instruments.

An electronic apparatus according to various embodiments will now be described with reference to the accompanying drawings. The term 'user' may denote a person who uses the electronic apparatus. The term 'user' may also refer to another apparatus (e.g., an artificial intelligence electronic apparatus) that uses the electronic apparatus.

Although a suffix "module" or "unit" is used for constituent elements described in the following description, it is used only for convenient description of the specification. The suffixes "module" and "unit" may be interchangeably used.

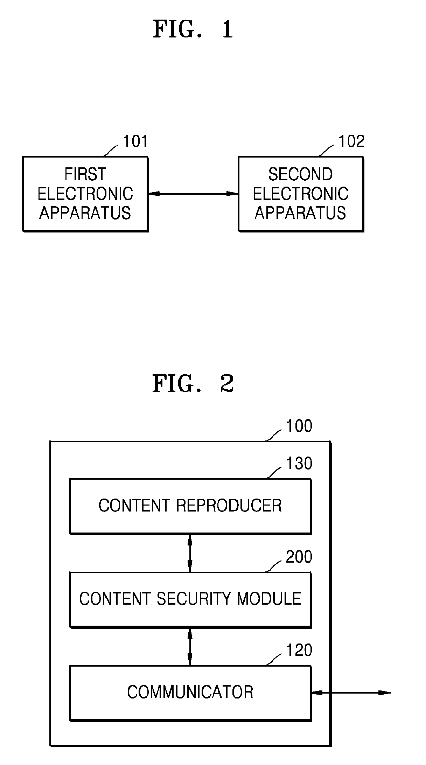

FIG. 1 is a block diagram for explaining a security system when content is shared between electronic apparatuses according to an embodiment of the present invention.

Referring to FIG. 1, a content security system according to an embodiment of the present invention may include a first electronic apparatus 101 and a second electronic apparatus 102. For example, the first electronic apparatus 101 may be an electronic apparatus that transmits content and the second electronic apparatus 102 may be an electronic apparatus that receives content. Alternatively, in contrast, the second electronic apparatus 102 may be an electronic apparatus that transmits content and the first electronic apparatus 101 may be an electronic apparatus that receives content.

In the present specification, examples of each of the first electronic apparatus 101 and the second electronic apparatus 102 may include a TV set, a monitor, a mobile phone, a smart phone, a notebook computer, a tablet PC, a digital broadcasting electronic apparatus, a PDA, and a PMP. However, the present invention is not limited thereto, and examples of each of the first electronic apparatus 101 and the second electronic apparatus 102 may include devices that may transmit or receive content through wired or wireless communication.

For convenience of description, the following will be explained on the assumption that the first electronic apparatus 101 is a transmitting electronic apparatus that transmits content and the second electronic apparatus 102 is a receiving electronic apparatus that receives content.

The first electronic apparatus 101 may transmit content to the second electronic apparatus 102. In this case, examples of the content may include text, an image, a video, an audio, and a moving image. The first electronic apparatus 101 may convert content data into a packet and may transmit the packet to the second electronic apparatus 102.

According to an embodiment of the present invention, for security purpose, the first electronic apparatus 101 may generate security content by encrypting content data and may transmit the security content and a security message to the second electronic apparatus 102.

In this case, the security message may be a message generated based on a security key that is used to decrypt the security content, content transmitter identification information about a content transmitter that transmits content, and content receiver identification information about a content receiver that receives content. For example, the security message may be information generated by encrypting the security key, the content transmitter identification information, and the content receiver identification information, which will be explained below.

Also, the first electronic apparatus 101 may add the security message to the security content and may transmit the security content to which the security message is added to the second electronic apparatus 102. For example, the first electronic apparatus 101 may add the security message to a header area of a security content packet. Alternatively, the first electronic apparatus 101 may separately transmit the security message and the security content to the second electronic apparatus 102.

The second electronic apparatus 102 may receive the security content and the security message from the first electronic apparatus 101. In this case, the second electronic apparatus 102 may receive the security content to which the security message is added, or may separately receive the security content and the security message.

The second electronic apparatus 102 may extract the security key included in the security message based on the security message and second electronic apparatus user identification information. Also, the second electronic apparatus 102 may decrypt the received security content based on the extracted security key. In this case, when the receiver identification information used to generate the received security message and the second electronic apparatus user identification information are the same, the second electronic apparatus 102 may decrypt the security content into original content by using the extracted security key. In contrast, when the receiver identification information used to generate the security message and the second electronic apparatus user identification information are not the same, the second electronic apparatus 102 may not decrypt the security content into the original content by using the extracted security key.

Also, according to an embodiment of the present invention, for content security purpose, the first electronic apparatus 101 may encrypt content data and may add first authentication information to a header of a content data packet. The first authentication information that is information for checking whether there is a right to access content may be information generated by encrypting the content transmitter identification information and the content receiver identification information. Generation of the first authentication information will be explained below.

The second electronic apparatus 102 may receive the content data packet to which the first authentication information is added. Also, the second electronic apparatus 102 may generate second authentication information by encrypting electronic apparatus user identification information. Generation of the second authentication information will also be explained below. Also, the second electronic apparatus 102 may determine whether there is a right to access received content by comparing the generated second authentication information with the first authentication information.

As a result of the comparison, when part of the first authentication information and the second authentication information are the same, the second electronic apparatus 102 may decrypt the received content data.

Although content is provided between electronic apparatuses without a relay server in FIG. 1, the security system when content is shared according to an embodiment of the present invention may further include a relay server that relays content between the first electronic apparatus and the second electronic apparatus. When the relay server exists, the relay server may generate the security key or a random number for generating the first authentication information and the second authentication information and may transmit the security key or the random number to the first electronic apparatus or the second electronic apparatus.

Although the first electronic apparatus 101 encrypts content and transmits the encrypted content to the second electronic apparatus 102 in FIG. 1, the present invention is not limited thereto and a separate server may transmit encrypted security content to the second electronic apparatus 102.

In this case, the first electronic apparatus 101 may transmit the security message including the security key for decrypting the security content transmitted to the second electronic apparatus 102 to the second electronic apparatus 102, and the second electronic apparatus 102 may decrypt the security content received from the server based on the security message received from the first electronic apparatus 101.

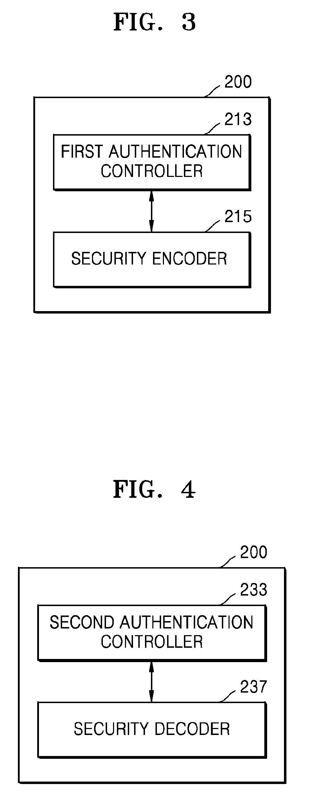

FIG. 2 is a block diagram illustrating a configuration of an electronic apparatus 100 according to an embodiment of the present invention. FIGS. 3 through 5 are each a block diagram illustrating a configuration of a content security module 200 according to an embodiment of the present invention.

The electronic apparatus 100 of FIG. 2 may be the first electronic apparatus 101 or the second electronic apparatus 102 of FIG. 1.

Referring to FIG. 2, the electronic apparatus 100 according to an embodiment of the present invention may include the content security module 200, a communicator 120, and a content reproducer 130. The content security module 200 according to an embodiment of the present invention will now be explained with reference to FIGS. 3 through 5.

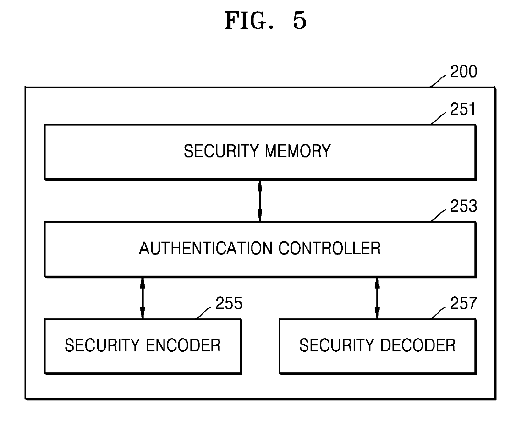

The content security module 200 according to an embodiment of the present invention may include a first authentication controller 213 and a security encoder 215 as shown in FIG. 3. Alternatively, the content security module 200 according to an embodiment of the present invention may include a second authentication controller 233 and a security decoder 237 as shown in FIG. 4. However, the present invention is not limited thereto, and the content security module 200 according to an embodiment of the present invention may include the first and second authentication controllers 213 and 233, the security encoder 215, and the security decoder 237. Also, the content security module 200 according to an embodiment of the present invention may further include a security memory 251 as shown in FIG. 5.

Referring to FIG. 3, the content security module 200 of the electronic apparatus (e.g., the first electronic apparatus) that transmits security content according to an embodiment of the present invention may include the first authentication controller 213 and the security encoder 215.

The first authentication controller 213 may receive transmitter identification information and receiver identification information. In this case, the transmitter identification information may include at least one of a telephone number of an electronic apparatus that transmits content, a key that is pre-shared by the electronic apparatus that transmits content, pre-shared identification information, information used for a pre-shared identification information generation algorithm, and an identifier (ID) and an e-mail address of a user of the electronic apparatus that transmits content.

Also, the receiver identification information may include, but not limited to, at least one of a telephone number of an electronic apparatus to which content is to be transmitted, a key that is pre-shared by the electronic apparatus to which content is to be transmitted, pre-shared identification information, information used for a pre-shared identification information generation algorithm, and an ID and an e-mail address of a user of the electronic apparatus to which content is to be transmitted.

The first authentication controller 213 may generate a security key. For example, the security key may be generated by generating a random number. Alternatively, the first authentication controller 213 may generate the security key by combining the received transmitter identification information and the received receiver identification information. For example, the first authentication controller 213 may generate the security key by performing a mathematical operation on the transmitter identification information and the receiver identification information. In this case, examples of the mathematical operation may include, but not limited to, a hash function (e.g., SHA or MD5), an XOR operation, an arithmetic operation, and a shuffling operation.

The first authentication controller 213 may generate a security message based on the generated security key, the transmitter identification information, and the receiver identification information. In this case, the first authentication controller 213 may generate the security message by encrypting the security key, the transmitter identification information, and the receiver identification information, or may generate the security message by combining the security key, the transmitter identification information, and the receiver identification information.

For example, the first authentication controller 213 may generate the security key by performing a mathematical operation on the security key, the transmitter identification information, and the receiver identification information. In this case, examples of the mathematical operation may include, but not limited to, a hash function (e.g., SHA or MD5), an XOR operation, an arithmetic operation, and a shuffling operation.

Also, the first authentication controller 213 may set position information for decrypting the security content and may generate the security message based on the generated security key and the set position information. In this case, the first authentication controller 213 may set position information about a position where content is generated as the position information for decrypting the security content.

Also, when the content is image content, the first authentication controller 213 may recognize a user image included in the content and may generate the security message based on the security key and user identification information corresponding to the recognized user image.

Alternatively, the first authentication controller 213 may generate the security message based on the security key and user identification information tagged to the content.

Alternatively, the first authentication controller 213 may set period information about a period for which the security content is shared and may generate the security message based on the security key and the set period information.

The first authentication controller 213 may transmit the generated security message to the security encoder 215. Alternatively, the first authentication controller 213 may transmit the generated security message to the second electronic apparatus 102. For example, the first authentication controller 213 may transmit the generated security message through the communicator 120 of FIG. 2 to the second electronic apparatus 102.

The security encoder 215 may generate the security content by encrypting the content. In this case, the security encoder 215 may encrypt the content by using a codec that complies with the standard.

Also, the security encoder 215 may add the security message received from the first authentication controller 213 to the security content. In this case, the security encoder 215 may add the security message to a header of a security content data packet.

Also, the security encoder 215 may transmit the security content to the second electronic apparatus 102, or may transmit the security content to which the security message is added to the second electronic apparatus 102. For example, the security encoder 215 may transmit the security content or the security content to which the security message is added through the communicator 120 of FIG. 2 to the second electronic apparatus 102.

According to an embodiment of the present invention, the first authentication controller 213 may generate first authentication information based on the transmitter identification information and the receiver identification information.

The first authentication controller 213 may generate encrypted first authentication information by performing a mathematical operation on the transmitter identification information and the receiver identification information. Also, in order to strengthen content security, the first authentication controller 213 may generate a random number and may generate encrypted first authentication information by performing a mathematical operation on the generated random number, the transmitter identification information, and the receiver identification information.

For example, the first authentication information may include at least one of random number encryption information E0, transmitter encryption information E1, and receiver encryption information E2. The random number encryption information E0 may refer to information obtained by generating a random number and encrypting the generated random number by performing a mathematical operation on the generated random number.

Also, the transmitter identification information E1 may refer to information obtained by encrypting the transmitter identification information by performing a mathematical operation on the transmitter identification information. The receiver encryption information E2 may refer to information obtained by encrypting the receiver identification information by performing a mathematical operation on the receiver identification information.

Examples of the mathematical operation performed to generate the random number encryption information E0, the transmitter encryption information E1, and the receiver encryption information E2 may include, but not limited to, a hash function (e.g., SHA or MD5), an XOR operation, an arithmetic operation, and a shuffling operation. For convenience of description, the following will be explained on the assumption that the first authentication information is generated by performing a hash function and an XOR operation.

The hash function is an operation of generating a random number with a fixed length, and a value generated by the hash function is referred to as a hash value. In this case, when a hash value is different, it may mean that original data is different. However, since the hash function is a one-way function, original data may not be restored from a hash value. Accordingly, when a hash function is used as a mathematical operation, original data is concealed and whether the original data is the same may be determined by comparing a hash value.

The random number encryption information E0 may be a hash value (referred to as a first hash value) obtained by performing a hash function on the random number.

Also, the transmitter encryption information E1 may be a hash value obtained by performing a hash function on the transmitter identification information. Alternatively, the transmitter encryption information E1 may be an XOR value (referred to as a first XOR value) obtained by performing an XOR operation on the first hash value and a hash value (referred to as a second has value) obtained by performing a hash function on the transmitter identification information. Alternatively, the transmitter encryption information may be a hash value obtained by performing again a hash function on the first XOR value.

In addition, the transmitter encryption information E1 may be a value obtained by shuffling the second hash value or a value obtained by shuffling the transmitter identification information. Alternatively, the transmitter encryption information E1 may be a value obtained by performing an arithmetic operation (e.g., multiplication or addition) on the transmitter identification information and the generated random number.

As such, since the first authentication controller 213 generates the transmitter encryption information E1 by performing a mathematical operation on the transmitter identification information, the first authentication controller 213 may conceal the transmitter identification information.

The first authentication controller 213 may obtain the receiver encryption information E2 by performing the same method as the above method used to encrypt the transmitter encryption information.

For example, the receiver encryption information E2 may be a hash value obtained by performing a hash function on the receiver identification information. Alternatively, the receiver encryption information E2 may be an XOR value (referred to as a second XOR value) obtained by performing an XOR operation on the first hash value and a hash value (referred to as a third hash value) obtained by performing a hash function on the receiver identification information. Alternatively, the receiver encryption information E2 may be a hash value obtained by performing again a hash function on the second XOR value.

In addition, the receiver encryption information E2 may be a value obtained by shuffling the third hash value or a value obtained by shuffling the receiver identification information. Alternatively, the receiver encryption information E2 may be a value obtained by performing an arithmetic operation (e.g., multiplication or addition) on the receiver identification information and the generated random number.

The first authentication controller 213 may transmit the generated first authentication information to the security encoder 215, or may transmit the generated first authentication information through the communicator 120 of FIG. 2 to the second electronic apparatus 102.

The security encoder 215 may add the received first authentication information to the security content. In this case, the security encoder 215 may add the first authentication information to a header of a security content data packet.

Also, the security encoder 215 may transmit the security content or the security content to which the first authentication information is added through the communicator 120 of FIG. 2 to the second electronic apparatus 102.

Referring to FIG. 4, the content security module 200 of the electronic apparatus (e.g., the second electronic apparatus) that receives security content according to an embodiment of the present invention may include the second authentication controller 233 and the security decoder 237.

The second authentication controller 233 may receive a security message. In this case, the second authentication controller 233 may directly receive the security message, or may receive the security message through the security decoder 237.

For example, as described with reference to FIG. 3, when the security encoder 215 of the first electronic apparatus 101 adds the security message to security content and transmits the security content to which the security message is added to the second electronic apparatus 102, the security decoder 237 of the second electronic apparatus 102 may receive the security content to which the security message is added. Accordingly, the security decoder 237 may extract the security message from the received security content and may transmit the extracted security message to the second authentication controller 233.

Also, the second authentication controller 233 may receive electronic apparatus user identification information. In this case, the electronic apparatus user identification information may include at least one of, but not limited to, a telephone number of an electronic apparatus, a key that is pre-shared by the electronic apparatus, information used for a pre-shared identification information generation algorithm, and an ID and an e-mail address of a user of the electronic apparatus.

The second authentication controller 233 may extract a security key based on the received security message and the electronic apparatus user identification information. For example, the second authentication controller 233 may extract the security key by performing any of various mathematical operations on the security message and the electronic apparatus user identification information.

In this case, when any one of receiver identification information and transmitter identification information used by a transmitter electronic apparatus to generate the security message is the same as the electronic apparatus user identification information, the second authentication controller 233 may extract the security key (i.e., a security key generated by the transmitter electronic apparatus) for decrypting the security content into original content.

In contrast, when any one of the receiver identification information and the transmitter identification information used by the transmitter electronic apparatus to generate the security message is not the same as the electronic apparatus user identification information, the second authentication controller 233 extracts a security key other than the security key (i.e., the security key generated by the transmitter electronic apparatus) for decrypting the security content into the original content.

Also, the second authentication controller 233 may receive position information of an electronic apparatus and may extract the security key based on the received position information and the security message.

In this case, only when position information about a position where the security content is used, which is set by the transmitter electronic apparatus to generate the security message, and the position information of the electronic apparatus are the same, the second authentication controller 233 may extract the security key (i.e., the security key generated by the transmitter electronic apparatus) for decrypting the security content into the original content.

Alternatively, when position information about a position where the security content is used, which is set by the transmitter electronic apparatus to generate the security message, is different from position information of the second electronic apparatus 102, the second authentication controller 233 may not extract the security key from the received security message and may not decrypt the received security content.

Also, the second authentication controller 233 may receive current time information of the electronic apparatus and may extract the security key based on the received current time information and the security message.

In this case, only when the current time information of the electronic apparatus is included in a period for which the security content is used, which is set by the transmitter electronic apparatus to generate the security message, the second authentication controller 233 may extract the security key (i.e., the security key generated by the transmitter electronic apparatus) for decrypting the security content into the original content.

Alternatively, when current time information of the second electronic apparatus 102 is not included in a period for which the security content is used, which is set by the first electronic apparatus 101 to generate the security message, the second authentication controller 233 may not extract the security key from the received security message and may not decrypt the received security content.

The second authentication controller 233 may transmit the extracted security key to the security decoder 237.

The security decoder 237 may receive the security content from an external electronic apparatus (e.g., the first electronic apparatus). In this case, the received security content may be security content to which the security message is added.

The security decoder 237 may decrypt the received security content by using the security key extracted by the second authentication controller 233.

For example, when the security key extracted by the second authentication controller 233 is the same as a security key generated by the transmitter electronic apparatus (e.g., the first electronic apparatus), the security decoder 237 may decrypt the security content into the original content.

In contrast, when the security key extracted by the second authentication controller 233 is different from the security key generated by the transmitter electronic apparatus, the security decoder 237 may not decrypt the security content into the original content.

According to an embodiment of the present invention, the second authentication controller 233 may receive first authentication information. In this case, the second authentication controller 233 may directly receive the first authentication information, or may receive the first authentication information through the security decoder 237.

For example, as described with reference to FIG. 3, when the security encoder 215 of the first electronic apparatus 101 adds the first authentication information to the security content and transmits the security content to which the first authentication information is added to the second electronic apparatus 102, the security decoder 237 of the second electronic apparatus 102 may receive the security content to which the first authentication information is added. Accordingly, the security decoder 237 may extract the first authentication information from the received security content and may transmit the extracted first authentication information to the second authentication controller 233.

Also, the second authentication controller 233 may generate encrypted second authentication information by performing a mathematical operation on the electronic apparatus user identification information.

Also, the second authentication controller 233 may generate the encrypted second authentication information by performing a mathematical operation on the electronic apparatus user identification information and the random number encryption information E0 included in the first authentication information.

In this case, examples of the mathematical operation may include at least one of, but not limited to, a hash function, an XOR operation, an arithmetic operation, and a shuffling operation.

For convenience of description, the following will be explained on the assumption that second authentication information is generated by performing a hash function and an XOR operation.

For example, the second authentication information may be a hash value obtained by performing a hash function on the electronic apparatus user identification information. Alternatively, the second authentication information may be an XOR value (referred to as a third XOR value) obtained by performing an XOR operation on random number encryption information (referred to as a first hash value) and a hash value (referred to as a fourth hash value) obtained by performing a hash function on the electronic apparatus user identification information. Alternatively, the transmitter encryption information may be a hash value obtained by performing again a hash function on the third XOR value.

In addition, the second authentication information may be a value obtained by shuffling the fourth hash value or a value obtained by shuffling the electronic apparatus user identification information, or may be a value obtained by performing an arithmetic operation (e.g., multiplication or addition) on the electronic apparatus user identification information and a generated random number.

The second authentication controller 233 may determine whether part of the first authentication information and the second authentication information are the same by comparing the first authentication information with the second authentication information. When the part of the first authentication information and the second authentication information are the same, the security decoder 237 may decrypt the received security content into the original content.

For example, when the part of the first authentication information and the second authentication information are the same, the second authentication controller 233 may transmit a key for decrypting the security content into the original content to the security decoder 237, and the security decoder 237 may decrypt the security content by using the received key.

Although a security content module of an electronic apparatus that transmits security content and a security content module of an electronic apparatus that receives the security content are separately illustrated and described in FIGS. 3 and 4, the present invention is not limited thereto. An electronic apparatus according to an embodiment of the present invention may transmit and receive security content, and may include the security content module 200 including all of the first authentication controller 213, the second authentication controller 233, the security encoder 215, and the security decoder 237 of FIGS. 3 and 4.

Referring to FIG. 5, another security content module according to an embodiment of the present invention may include the security memory 251, an authentication controller 253, a security encoder 255, and a security decoder 257.

The authentication controller 253 may receive electronic apparatus user identification information (referred to as first identification information) and may generate a security key. The electronic apparatus user identification information and generation of the security key have been described in detail with reference to FIGS. 3 and 4, and thus a detailed explanation thereof will not be given.

The authentication controller 253 may generate a security message based on the generated security key and the electronic apparatus user identification information (referred to as first identification information). In this case, the authentication controller 253 may generate the security message by encrypting the security key and the electronic apparatus user identification information, or may generate the security message by combining the security key and the electronic apparatus user identification information.

For example, the authentication controller 253 may generate the security key by performing a mathematical operation on the security key and the electronic apparatus user identification information. In this case, examples of the mathematical operation may include, but not limited to, a hash function (e.g., SHA or MD5), an XOR operation, an arithmetic operation, and a shuffling operation.

Also, the authentication controller 253 may transmit the generated security message to the security encoder 255, and the security encoder 255 may store the security message.

The security encoder 255 may generate security content by encrypting content, and may add the security message received from the authentication controller 253 to the security content. Also, the security memory 251 may store the security content or the security content to which the security message is added. In this case, the security memory 251 may match the security content to the security message corresponding to the security content and may store the security content and the security message.

When a request to reproduce the security content is received based on a user input, the authentication controller 253 may receive the security message corresponding to the security content from the security memory 251. The authentication controller 253 may extract the security key based on electronic apparatus user identification information (referred to as second identification information) and the security message. For example, the authentication controller 253 may extract the security key by performing any of various mathematical operations on the security message and the second identification information.

In this case, only when the first identification information and the second identification information are the same, the authentication controller 253 may extract the security key (that is the same as a security key used to generate the security message) for decrypting the security content into original content from the security message.

For example, when information of an electronic apparatus in which the security content is stored is changed (for example, when a subscriber identification module (SIM) card is changed) and thus the first identification information and the second identification information are not the same, the security key for decrypting the security content into the original content may not be extracted.

The security decoder 257 may decrypt the security content by using the security key extracted by the authentication controller 253.

Referring back to FIG. 2, the communicator 120 may include an Internet module and a short-range communication module.

The Internet module that is a module for Internet access may be provided inside or outside the electronic apparatus 100. Wireless LAN (WLAN) (Wi-Fi), Wireless broadband (Wibro), World Interoperability for Microwave Access (Wimax), or High Speed Downlink Packet Access (HSDPA) may be used as an Internet technology.

The short-range communication module refers to a module for short-range communication. Bluetooth, Radio Frequency Identification (RFID), Infrared Data Association (IrDA), Ultra Wideband (UWB), or ZigBee may be used as a short-range communication technology.

According to an embodiment of the present invention, the communicator 120 may transmit content to an external electronic apparatus and may receive content from the external electronic apparatus. In this case, the communicator 120 may transmit and receive a content data packet.

The content reproducer 130 may reproduce decrypted data. The content reproducer 130 may include a display and an audio module.

The display generates a driving signal by converting an image signal, a data signal, an on-screen display (OSD) signal, and a control signal processed by the electronic apparatus 100. Also, the display may be a plasma display panel (PDP), a liquid-crystal display (LCD), an organic light-emitting diode (OLED), or a flexible display, and may be a three-dimensional (3D) display. Also, the display may include a touchscreen and may be used as an input device as well as an output device.

According to an embodiment of the present invention, when content includes an image, the display may display an image corresponding to a decrypted image signal from among content data.

The audio module is used to output an audio signal. The audio module outputs received or stored audio data from the communicator 120 in a call signal reception mode, a conversation mode, a recording mode, a voice recognition mode, or a broadcast reception mode. Also, the audio module outputs a sound signal related to a function performed by the electronic apparatus 100, for example, a call signal receiving sound or a message receiving sound. Examples of the audio module may include a speaker and a buzzer.

According to an embodiment of the present invention, when content includes an audio, the audio module may output a decrypted audio signal from among received content data.

An electronic apparatus for providing a content security function according to an embodiment of the present invention includes an authentication controller configured to generate a security key used to decrypt security content and generate a security message based on the security key, content transmitter identification information and content receiver identification information, a security encoder configured to generate the security content by encrypting content, and a communicator configured to transmit the security content and the security message to an external electronic apparatus.

The authentication controller according to an embodiment of the present invention may generate the security message by performing a mathematical operation on the security key, transmitter identification information, and receiver identification information.

The security encoder according to an embodiment of the present invention may add the security message to the security content.

The electronic apparatus for providing the content security function according to an embodiment of the present invention may further include an input device configured to receive the content receiver identification information, and the communicator may transmit the security content and the security message to an electronic apparatus corresponding to the content receiver identification information.

The authentication controller according to an embodiment of the present invention may set position information for decrypting the security content into original content and may generate the security message based on the security key and the set position information.

The authentication controller according to an embodiment of the present invention may set position information about a position where the content is generated as the position information for decrypting the security content into the original content.

The authentication controller according to an embodiment of the present invention may recognize a user image included in the content and may generate the security message based on the security key and user identification information corresponding to the recognized user image.

The authentication controller according to an embodiment of the present invention may generate the security message based on user identification information tagged to the content.

The authentication controller according to an embodiment of the present invention may set period information about a period for which the security content is shared and may generate the security message based on the security key and the set period information.

An electronic apparatus for providing a content security function according to an embodiment of the present invention includes a communicator configured to receive a security message and security content, an authentication controller configured to extract a security key based on the security message and electronic apparatus user identification information, a security decoder configured to decrypt the security content based on the extracted security key, and a content reproducer configured to reproduce the decrypted content.

When the security content to which the security message is added is received, the security decoder according to an embodiment of the present invention may extract the security message from the security content.

The authentication controller according to an embodiment of the present invention may extract the security key by performing a mathematical operation on the security message and the electronic apparatus user identification information.

The authentication controller according to an embodiment of the present invention may receive position information of the electronic apparatus and may extract the security key based on the security message and the position information of the electronic apparatus.

The authentication controller according to an embodiment of the present invention may receive current time information and may extract the security key based on the security message and the current time information.

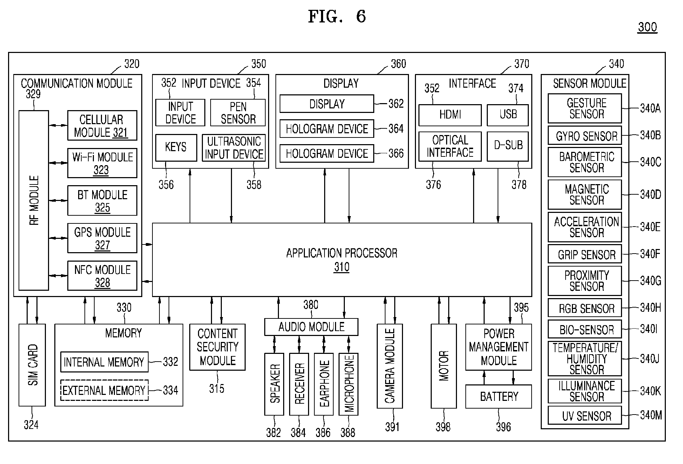

FIG. 6 is a block diagram illustrating a configuration of an electronic apparatus 300 according to an embodiment of the present invention.

Referring to FIG. 6, the electronic apparatus 300 according to an embodiment of the present invention may include one or more application processors (APs) 310, a communication module 320, a SIM card 324, a memory 330, a sensor module 340, an input device 350, a display 360, an interface 370, an audio module 380, a camera module 391, a power management module 395, a battery 396, an indicator 397, and a motor 398.

The communication module 320 of FIG. 6 corresponds to the communicator 120 of FIG. 2, a content security module 315 of FIG. 6 corresponds to the content security module 200 of FIG. 2, and the audio module 380 corresponds to the content reproducer 130 of FIG. 2, and thus a repeated explanation thereof will not be given.

The APs 310 may control a plurality of hardware or software elements connected to the APs 310 by driving an operating system or an application program, and may calculate or process various data including multimedia data. Each AP 310 may be provided as, for example, a system-on-chip (SoC). According to an embodiment, the AP 310 may further include a graphics processing unit (GPU, not shown).

The communication module 320 may transmit/receive data between the electronic apparatus 300 and a server or electronic apparatuses connected through a network to the electronic apparatus 300. According to an embodiment, the communication module 320 may include a cellular module 321, a Wi-Fi module 323, a Bluetooth (BT) module 325, a GPS module 327, a near field communication (NFC) module 328, and a radio frequency (RF) module 329.

The cellular module 321 may provide a voice cell service, a video call service, a text service, or an Internet service through a communication network (e.g., long-term evolution (LTE), LTE advanced (LTE-A), code division multiple access (CDMA), wideband CDMA (WCDMA), universal mobile telecommunications system (UMTS), WiBro, or global system for mobile communications (GSM)). Also, the cellular module 321 may identify and authenticate an electronic apparatus in a communication network by using, for example, a subscriber identification module (e.g., the SIM card 324). According to an embodiment, the cellular module 321 may perform at least some of functions that may be provided by the AP 310. For example, the cellular module 321 may perform at least part of a multimedia control function.

According to an embodiment, the cellular module 321 may include a communication processor (CP). Also, the cellular module 321 may be provided as, for example, an SoC. Although elements such as the cellular module 321 (e.g., a communication processor), the memory 330, and the power management module 395 are separate from the AP 310 in FIG. 6, according to an embodiment, the AP 310 may include at least some of the elements (e.g., the cellular module 321).

According to an embodiment, the AP 310 or the cellular module 321 (e.g., a communication processor) may load a command or data received from at least one of a nonvolatile memory or other elements to a volatile memory and may process the loaded command or data. Also, the AP 310 or the cellular module 321 may store data received from at least one of other elements or generated by at least one of the other elements in a nonvolatile memory.

Each of the Wi-Fi module 323, the BT module 325, the GPS module 327, and the NFC module 328 may include a processor for processing data transmitted/received through the module. Although the cellular module 321, the Wi-Fi module 323, the BT module 325, the GPS module 327, and the NFC module 328 are illustrated as separate blocks in FIG. 6, according to an embodiment, at least some (e.g., two or more) of the cellular module 321, the Wi-Fi module 323, the BT module 325, the GPS module 327, and the NFC module 328 may be included in one integrated chip (IC) or an IC package. For example, at least some (e.g., a communication processor corresponding to the cellular module 321 and a Wi-Fi processor corresponding to the Wi-Fi module 323) of processors corresponding to the cellular module 321, the Wi-Fi module 323, the BT module 325, the GPS module 327, and the NFC module 328 may be provided as one SoC.

The RF module 329 may transmit/receive data, for example, an RF signal. Although not shown, the RF module 329 may include, for example, a transceiver, a power amp module (PAM), a frequency filter, or a low noise amplifier (LNA). Also, the RF module 329 may further include a part, for example, a conductor or a conductive line, for transmitting/receiving electromagnetic waves in a free space through wireless communication. Although the cellular module 321, the Wi-Fi module 323, the BT module 325, the GPS module 327, and the NFC module 328 share one RF module 329 in FIG. 6, according to an embodiment of the present invention, at least one of the cellular module 321, the Wi-Fi module 323, the BT module 325, the GPS module 327, and the NFC module 328 may transmit/receive an RF signal through a separate RF module.

The SIM card 324 may be a card including a subscriber identification module, and may be inserted into a slot formed in a specific position of the electronic apparatus. The SIM card 324 may include unique identification information (e.g., integrated circuit card identifier (ICCID)) or subscriber information (e.g., international mobile subscriber identity (IMSI)).

The memory 330 may include an internal memory 332 or an external memory 334. The internal memory 332 may include at least one of, for example, a volatile memory (e.g., a dynamic random-access memory (DRAM), a static RAM (SRAM), or a synchronous dynamic RAM (SDRAM)) and a non-volatile memory (e.g., a one-time programmable read-only memory (OTPROM), a programmable ROM (PROM), an erasable and programmable ROM (EPROM), an electrically erasable and programmable ROM (EEPROM), a mask ROM, a flash ROM, a NAND flash memory, or a NOR flash memory).

According to an embodiment, the internal memory 332 may be a solid state drive (SSD). The external memory 334 may further include a flash memory, for example, compact flash (CF), secure digital (SD), micro secure digital (Micro-SD), mini secure digital (Mini-SD), extreme digital (xD) or memory stick. The external memory 334 may be functionally connected to the electronic apparatus 300 through any of various interfaces. According to an embodiment, the electronic apparatus 300 may further include a storage device (or a storage medium) such as a hard drive.

The sensor module 340 may measure a physical quantity or detect an operation state of the electronic apparatus 300 and may convert measured or detected information into an electrical signal. The sensor module 340 may include at least one of, for example, a gesture sensor 340A, a gyro sensor 340B, a barometric sensor 340C, a magnetic sensor 340D, an acceleration sensor 340e, a grip sensor 340F, a proximity sensor 340G, a color sensor 340H (e.g., a red, green, and blue (RGB) sensor), a bio-sensor 340I, a temperature/humidity sensor 340J, an illuminance sensor 340K, and an ultraviolet (UV) sensor 340M. Additionally or alternatively, the sensor module 340 may include, for example, an E-nose sensor (not shown), an electromyography (EMG) sensor (not shown), an electroencephalogram (EEG) sensor (not shown), an electrocardiogram (ECG) sensor (not shown), an infrared (IR) sensor (not shown), an iris sensor (not shown), or a fingerprint sensor (not shown). The sensor module 340 may further include a control circuit for controlling at least one of sensors that are included therein.

The input device 350 may include a touch panel 352, a (digital) pen sensor 354, keys 356, or an ultrasonic input device 358. The touch panel 352 may recognize a touch input by using at least one of, for example, a capacitive method, a resistive method, an infrared method, and a microwave method. Also, the touch panel 352 may further include a control circuit. When a capacitive method is used, the touch panel 352 may recognize a physical contact or proximity. The touch panel 352 may further include a tactile layer. In this case, the touch panel 352 may provide a haptic feedback to a user.

The (digital) pen sensor 354 may be embodied by using, for example, a sheet with a method that is the same or similar to a method of receiving the user's touch input or a separate recognition sheet. The keys 356 may include, for example, physical buttons, optical keys, or a keypad. The ultrasonic input device 358 may check data by detecting a sound wave by using a microphone (e.g., a microphone 388) of the electronic apparatus 300 through an input unit that generates an ultrasound signal and may perform wireless recognition. According to an embodiment, the electronic apparatus 300 may receive a user input from an external apparatus (e.g., a computer or a server) connected to the electronic apparatus 300 by using the communication module 320.

The display 360 may include a panel 362, a hologram device 364, or a projector 366. The panel 362 may be, for example, an LCD panel or an active-matrix OLED (AM-OLED) panel. The panel 362 may be, for example, flexible, transparent, or wearable. The panel 362 may be one module integrated with the touch panel 352. The hologram device 364 may show a 3D image in the air by using light interference. The projector 366 may display an image by projecting light to a screen. The screen may be located inside or outside, for example, the electronic apparatus 300. According to an embodiment, the display 360 may further include a control circuit for controlling the panel 362, the hologram device 364, or the projector 366.

The interface 370 may include, for example, a high-definition multimedia interface (HDMI) 372, a universal serial bus (USB) 374, an optical interface 376, or a D-subminiature (D-sub) 378. The interface 370 may include, for example, a mobile high-definition link (MHL) interface, a secure Digital (SD) card/multi-media card (MMC) interface, or an infrared data association (IrDA) standard interface.

The audio module 3870 may convert a sound into an electrical signal and vice versa. The audio module 380 may process sound information input or output through, for example, a speaker 382, a receiver 384, an earphone 386, or the microphone 388.

According to an embodiment, the camera module 391 that is a device for capturing a still image and a moving image may include at least one image sensor (e.g., a front sensor or a rear sensor), a lens (not shown), an image signal processor (ISP, not shown), or a flash (not shown, e.g., an LED or a xenon lamp).

The power management module 395 may manage power of the electronic apparatus 300. Although not shown, the power management module 3954 may include, for example, a power management integrated circuit (PMIC), a charger IC, or a battery or fuel gauge.

The PMIC may be mounted in, for example, an IC or an SoC semiconductor. Charging methods may be classified into a wired charging method and a wireless charging method. The charger IC may charge a battery, and may prevent a charger against overvoltage or over current. According to an embodiment, the charger IC may include a charger IC for at least one of a wired charging method and a wireless charging method. Examples of the wireless charging method may include, for example, a magnetic resonance method, a magnetic induction method, and an electromagnetic method, and an additional circuit for wireless charging, for example, a coil loop, a resonance circuit, or a rectifier, may be added.

The battery gauge may measure, for example, a residual quantity, a charging voltage, current, or a temperature of the battery 396. The battery 396 may store or generate electricity, and may supply power to the electronic apparatus 300 by using the stored or generated electricity. The battery may include, for example, a rechargeable battery or a solar battery.

The indicator 397 may display a specific state, for example, a booting state, a message state, or a charging state, of the electronic apparatus 300 or a part (e.g., the AP 310) of the electronic apparatus 300. The motor 398 may convert an electrical signal into a mechanical vibration. Although not shown, the electronic apparatus 300 may include a processing device (e.g., a GPU) for supporting a mobile TV. The processing device for supporting the mobile TV may process media data according to the standard, for example, digital multimedia broadcasting (DMB), digital video broadcasting (DVB), or media flow.

Each of the elements of the mobile electronic apparatus according to various embodiments of the present invention may include one or more components, and the term of each element may vary according to a type of the electronic apparatus. The electronic apparatus according to various embodiments of the present invention may include at least one of the elements with omission or addition of some elements. Also, some elements of the electronic apparatus according to various embodiments of the present invention may be combined into one entity and may perform the same functions as those of the elements before being coupled.

The block diagrams of the mobile electronic apparatuses 100 and 300 of FIGS. 2 and 6 are block diagrams according to an embodiment of the present invention. Each element of the block diagram may be integrated, added, or omitted according to specifications of each of the actual electronic apparatuses 100 and 300. That is, if necessary, two or more elements may be combined into one element or one element may be divided into two or more elements. A function performed by each block is for describing an embodiment of the present invention, and a detailed operation or apparatus does not limit the scope of the present invention.

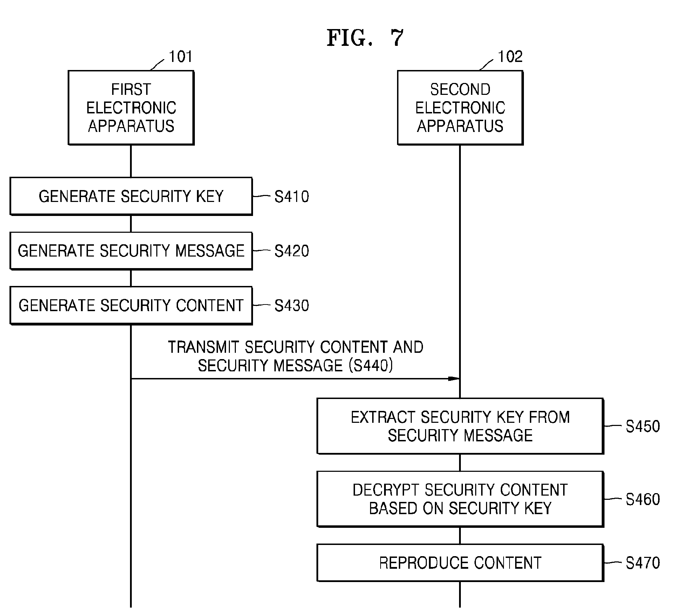

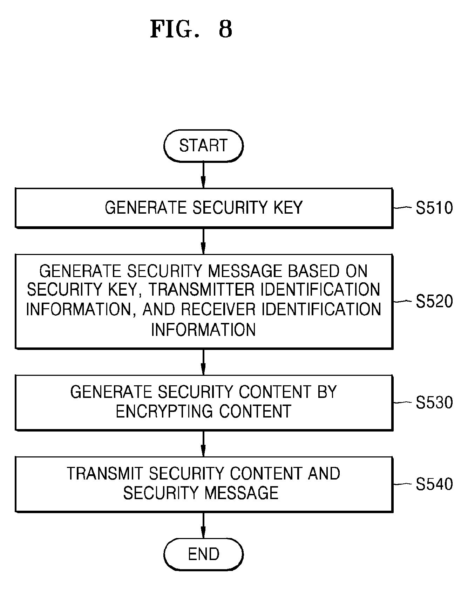

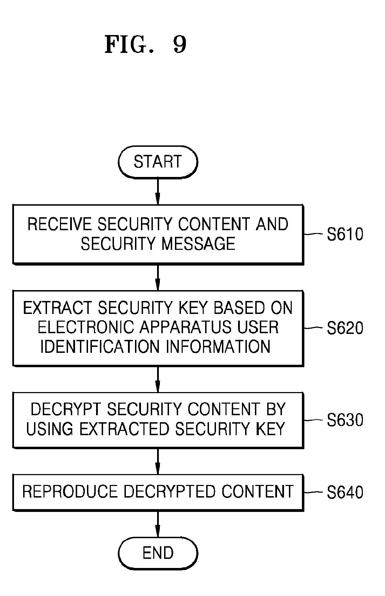

FIG. 7 is a flowchart for explaining a content security method according to an embodiment of the present invention. FIG. 8 is a flowchart of an operation of the first electronic apparatus of FIG. 7. FIG. 9 is a flowchart of an operation of the second electronic apparatus of FIG. 7.

Referring to FIG. 7, in operation S410, the first electronic apparatus 101 may generate a security key. The security key may refer to a key for decrypting security content into original content.

For example, the first electronic apparatus may generate the security key by generating a random number. Alternatively, the first electronic apparatus 101 may generate the security key by combining received transmitter identification information and received receiver identification information. For example, the first electronic apparatus 101 may generate the security key by performing a mathematical operation on the transmitter identification information and the receiver identification information. In this case, examples of the mathematical operation may include, but not limited to, a hash function (e.g., SHA or MD5), an XOR operation, an arithmetic operation, and a shuffling operation.

Also, in operation S420, the first electronic apparatus 101 may generate a security message including the security key.

The first electronic apparatus 101 may generate the security message by encrypting the security key, the transmitter identification information, and the receiver identification information, or may generate the security message by combining the security key, the transmitter identification information, and the receiver identification information.

For example, the first electronic apparatus 101 may generate the security message by performing a mathematical operation on the security key, the transmitter identification information, and the receiver identification information. In this case, examples of the mathematical operation may include, but not limited to, a hash function (e.g., SHA or MD5), an XOR operation, an arithmetic operation, and a shuffling operation.

In operation S430, the first electronic apparatus 101 may generate the security content by encrypting content.

In operation S440, the first electronic apparatus 101 may transmit the security message and the security content to the second electronic apparatus 102.

For example, the first electronic apparatus 101 may separately transmit the security message and the security content to the second electronic apparatus 102, or may transmit the security content to which the security message is added to the second electronic apparatus 102.

Operation S410 of FIG. 7 corresponds to operation S510 of FIG. 8, operation S420 of FIG. 7 corresponds to operation S520 of FIG. 8, operation S430 of FIG. 7 corresponds to operation S530 of FIG. 8, and operation S440 of FIG. 7 corresponds to operation S540 of FIG. 8, and thus a detailed explanation of FIG. 8 will not be given.

In operation S450, the second electronic apparatus 102 may extract the security key from the received security message.

When the security content to which the security message is added is received, the second electronic apparatus 102 may extract the security message from the security content. The second electronic apparatus 102 may extract the security key from the security message based on electronic apparatus user identification information. For example, the second electronic apparatus 102 may extract the security key by performing any of various mathematical operations on the security message and the electronic apparatus user identification information.

In operation S460, the second electronic apparatus 102 may decrypt the received security content based on the extracted security key.

In this case, when the extracted security key is the same as the security key generated in operation S410, the second electronic apparatus 102 may decrypt the security content into the original content. In contrast, when the extracted security key is different from the security key generated in operation S410, the second electronic apparatus 102 may not decrypt the security content into the original content.

Also, in operation S470, the second electronic apparatus 102 may reproduce the decrypted content.

Operation S440 of FIG. 7 corresponds to operation S610 of FIG. 9, operation S450 of FIG. 7 corresponds to operation S620 of FIG. 9, operation S460 of FIG. 7 corresponds to operation S630 of FIG. 9, and operation S470 of FIG. 7 corresponds to operation S640 of FIG. 9, and thus a detailed explanation of FIG. 9 will not be given.

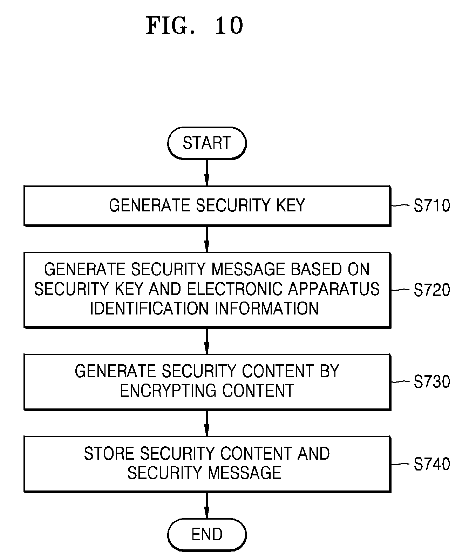

FIG. 10 is a flowchart of a content security method according to an embodiment of the present invention.

Referring to FIG. 10, in operation S710, an electronic apparatus according to an embodiment of the present invention may generate a security key. Operation S710 of FIG. 10 corresponds to operation S410 of FIG. 7, and thus a detailed explanation thereof will not be given.

In operation S720, the electronic apparatus 100 or 300 may generate a security message based on the security key and electronic apparatus user identification information.

For example, the electronic apparatus 100 or 300 may generate the security message by encrypting the security key and the electronic apparatus user identification information, or may generate the security message by combining the security key and the electronic apparatus user identification information.

In operation S730, the electronic apparatus 100 or 300 may generate security content by encrypting content. Operation S730 of FIG. 10 corresponds to operation S430 of FIG. 7, and thus a detailed explanation thereof will not be given.

In operation S740, the electronic apparatus 100 or 300 may store the security content and the security message.

For example, the electronic apparatus 100 or 300 may store each of the security content and the security message or may store the security content to which the security message is added. Also, when the electronic apparatus 100 or 300 stores each of the security content and the security message, the electronic apparatus 100 or 300 may match the security content to the security message corresponding to the security content and may store the security content and the security message.

When a request to reproduce the stored security content is received, the electronic apparatus 100 or 300 may extract the security key from the security message corresponding to the security content based on the electronic apparatus user identification information and may decrypt the security content by using the extracted security key.

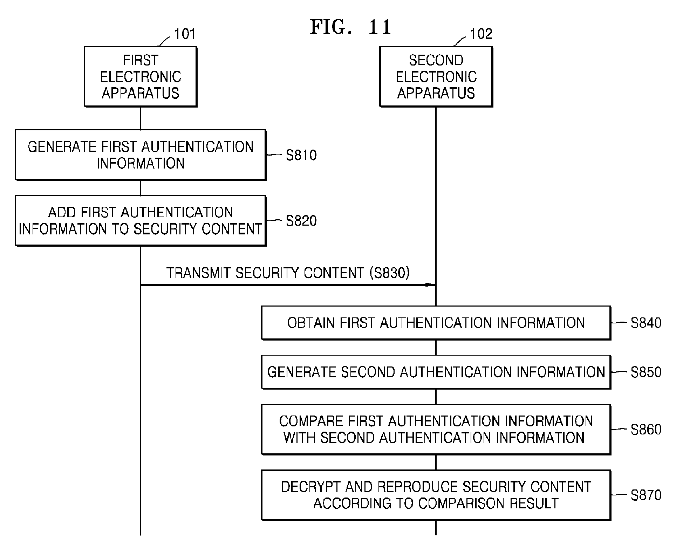

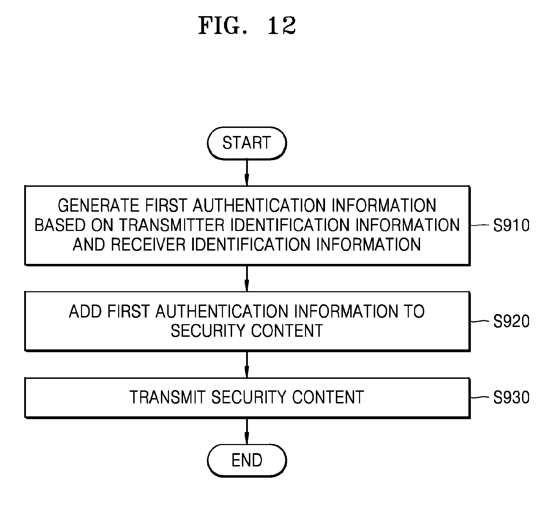

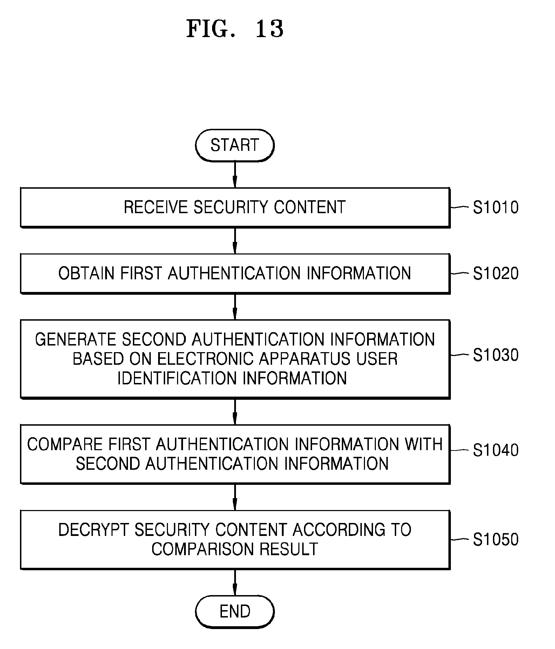

FIG. 11 is flowchart for explaining a content security method according to an embodiment of the present invention. FIG. 12 is a flowchart of an operation of the first electronic apparatus of FIG. 11. FIG. 13 is a flowchart of an operation of the second electronic apparatus of FIG. 11.

Referring to FIG. 11, in operation S810, the first electronic apparatus 101 may generate first authentication information based on transmitter identification information and receiver identification information.

For example, the first electronic apparatus 101 may generate encrypted first authentication information by performing a mathematical operation on the transmitter identification information and the receiver identification information. In this case, the first electronic apparatus 101 may enable the transmitter identification information and the receiver identification information not to be directly perceived in the first authentication information by performing any of various mathematical operation such as a hash function (e.g., SHA or MD5), an XOR operation, an arithmetic operation, or a shuffling operation on the transmitter identification information and the receiver identification information.

In operation S820, the first electronic apparatus 101 may generate security content by encrypting content and may add the first authentication information to the security content.

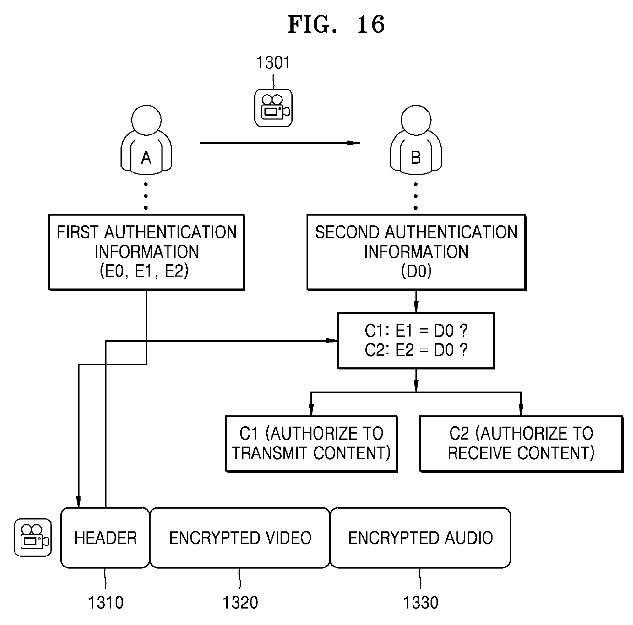

For example, referring to FIG. 16, when the content includes a moving image 1301, an encrypted content data packet may include a packet header 1310 and packet bodies. The packet bodies may include an encrypted video data area 1320 and an encrypted audio data area 1330. Also, each of the encrypted vide data area and the encrypted audio data area may include a header.

In this case, the first electronic apparatus 101 may add the first authentication information to the packet header 1310 or may add the first authentication information to the header of the encrypted video data area 1320 or the header of the encrypted audio data area 1330.

In operation S830, the first electronic apparatus 101 may transmit the security content to which the first authentication information is added to the second electronic apparatus 102.

Operation S810 of FIG. 11 corresponds to operation S910 of FIG. 12, operation S820 of FIG. 11 corresponds to operation S920 of FIG. 12, and operation S830 of FIG. 11 corresponds to operation S930 of FIG. 12, and thus a detailed explanation of FIG. 12 will not be given.

In operation S840, the second electronic apparatus 102 may obtain the first authentication information by receiving the security content.

For example, when the first authentication information is included in a header area of a received content data packet, the second electronic apparatus 102 may obtain the first authentication information by decrypting data of the header area of the received content data packet. The first authentication information may include encrypted transmitter encryption information E1 obtained by performing a mathematical operation on the transmitter identification information and encrypted receiver encryption information E2 obtained by performing a mathematical operation on the receiver identification information.

In operation S850, the second electronic apparatus 102 may generate second authentication information based on electronic apparatus user identification information.

For example, the second electronic apparatus 102 may generate encrypted second authentication information by performing a mathematical operation such as a hash function (e.g., SHA or MD5), an XOR operation, an arithmetic operation, or a shuffling operation on the electronic apparatus user identification information. In this case, a mathematical operation that is performed on the transmitter identification information or the receiver identification information to generate the first authentication information may be performed in the same manner on the electronic apparatus user identification information. Accordingly, the second electronic apparatus 102 may generate the second authentication information corresponding to the first authentication information.

In operation S860, the second electronic apparatus 102 may compare the first authentication information with the second authentication information. In operation S870, the second electronic apparatus 102 may decrypt and reproduce the content according to a result of the comparison.

For example, the second electronic apparatus 102 may determine whether part of the first authentication information and the second authentication information are the same, and when the part of the first authentication information and the second authentication information are the same, the second electronic apparatus 102 may decrypt and reproduce encrypted content. In contrast, when the part of the first authentication information and the second authentication information are not the same, the second electronic apparatus 102 may reproduce modified content or may not reproduce the content.

Operation S830 of FIG. 11 corresponds to operation S1010 of FIG. 13, operation S840 of FIG. 11 corresponds to operation S1020 of FIG. 13, operation S850 of FIG. 11 corresponds to operation S1030 of FIG. 13, operation S860 of FIG. 11 corresponds to operation S1040 of FIG. 13, and operation S870 of FIG. 11 corresponds to operation S1050 of FIG. 13, and thus a detailed explanation of FIG. 13 will not be given.

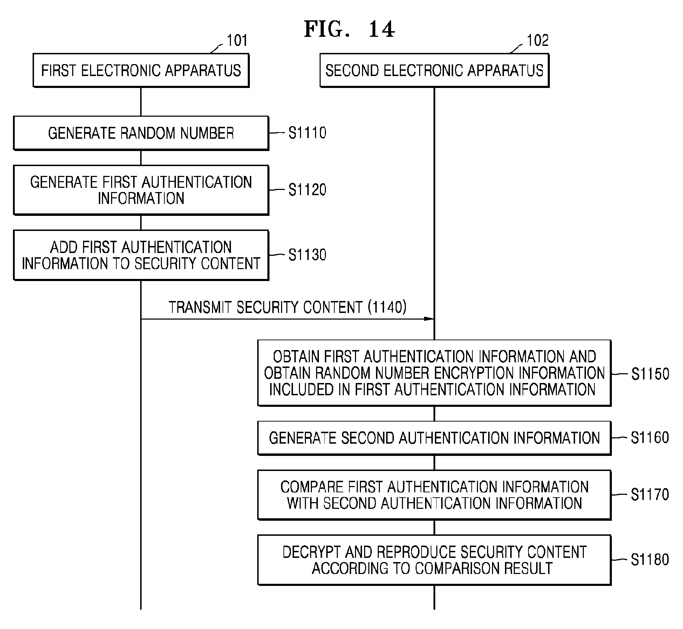

FIG. 14 is a flowchart for explaining a content security method according to an embodiment of the present invention.

Referring to FIG. 14, in operation S1110, the first electronic apparatus 101 may generate a random number.

In this case, the first electronic apparatus 101 may include a device for generating a random number and may generate a random number by using the device, or may receive a random number generated by a separate server. For example, when a relay server that relays content between the first electronic apparatus 101 and the second electronic apparatus 102 exists, the relay server may generate a random number and may transmit the random number to the first electronic apparatus 101.

In operation S1120, the first electronic apparatus 101 may generate first authentication information based on the generated random number, transmitter identification information, and receiver identification information. For example, as shown in FIG. 16, the first authentication information may include random number encryption information E0, transmitter encryption information E1, and receiver encryption information E2.

The random number encryption information E0 may be obtained by performing a mathematical operation on the generated random number. The transmitter encryption information E1 may be obtained by performing a mathematical operation on the transmitter identification information and the random number encryption information. The receiver encryption information E2 may be obtained by performing a mathematical operation on the receiver identification information and the random number encryption information, which has been explained in detail with reference to FIG. 3, and thus a repeated explanation thereof will not be given.

In operation S1130, the first electronic apparatus 101 may add the first authentication information to security content. In operation S1140, the first electronic apparatus 101 may transmit a security content data packet to which the first authentication information is added to the second electronic apparatus 102. For example, as shown in FIG. 16, the first electronic apparatus 101 may add the first authentication information to the header 1310 of the security content data packet and may transmit the content data packet to the second electronic apparatus 102.

Operations S1130 and S1140 of FIG. 14 correspond to operations S820 and S830 of FIG. 11, and thus a repeated explanation thereof will not be given.

In operation S1150, the second electronic apparatus 102 may receive the content data packet, may obtain the first authentication information, and may obtain the random number encryption information E0 included in the first authentication information.

Also, in operation S1160, the second electronic apparatus 102 may generate second authentication information based on the obtained random number encryption information E0 and electronic apparatus user identification information.

The second electronic apparatus 102 may generate encrypted second authentication information by performing a mathematical operation on the random number encryption information E0 and the electronic apparatus user identification information. In this case, a mathematical operation that is performed on the transmitter identification information or the receiver identification information to generate the first authentication information may be performed in the same manner on the electronic apparatus user identification information. Accordingly, the second electronic apparatus 102 may generate the second authentication information corresponding to the first authentication information, which has been described in detail with reference to FIG. 4, and thus a repeated explanation thereof will not be given.

In operation S1170, the second electronic apparatus 102 may compare the first authentication information with the second authentication information. In operation S1180, the second electronic apparatus 102 may decrypt and reproduce the content according to a result of the comparison.

Operations S1170 and S1180 of FIG. 14 correspond to operations S860 and S870 of FIG. 11, and thus a repeated explanation thereof will not be given.

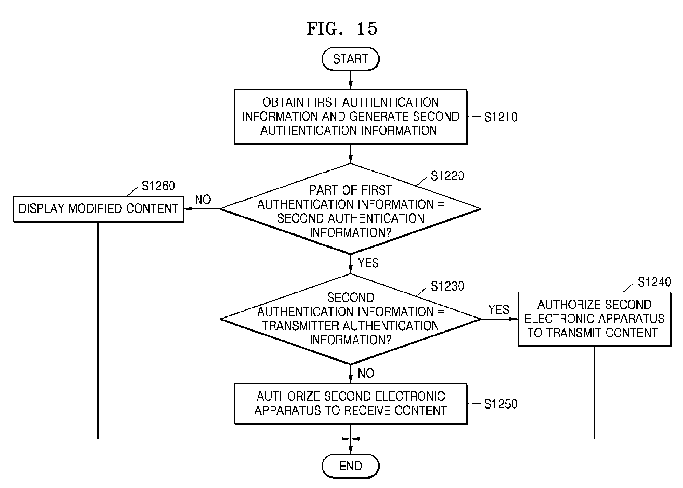

FIG. 15 is a detailed flowchart of operations S1170 and S1180 of FIG. 14. FIG. 16 is a diagram that is referred to when FIG. 15 is described.

Referring to FIG. 15, in operation S1210, the second electronic apparatus 102 may obtain first authentication information and generate second authentication information. In operation S1220, the second electronic apparatus 102 may determine whether part of the first authentication information and the second authentication information are the same.

In this case, the first authentication information may include transmitter encryption information E1 and receiver encryption information E2. Accordingly, the second authentication information D0 may be the same as the transmitter encryption information E1 included in the first authentication information, may be the same as the receiver encryption information E2 included in the first authentication information, or may not be the same as the part of the first authentication information.

When the second authentication information D0 is the same as the transmitter encryption information E1 (for example, in a case C1 of FIG. 16), in operation S1240, the second electronic apparatus 102 may be authorized to transmit content. For example, the second electronic apparatus 102 may, but not limited to, reproduce, correct, delete, copy, share, or re-transmit received security content.

When the second authentication information D0 is the same as the receiver encryption information (for example, in a case C2 of FIG. 16), in operation S1250, the second electronic apparatus 102 may be authorized to receive content. For example, the second electronic apparatus 102 may reproduce the received security content and may not, but not limited to, correct, delete, copy, share, and re-transmit the content.

When the second authentication information D0 is not the same as the part of the first authentication information, in operation S1260, the second electronic apparatus 102 may reproduce modified content, or may not reproduce the content.

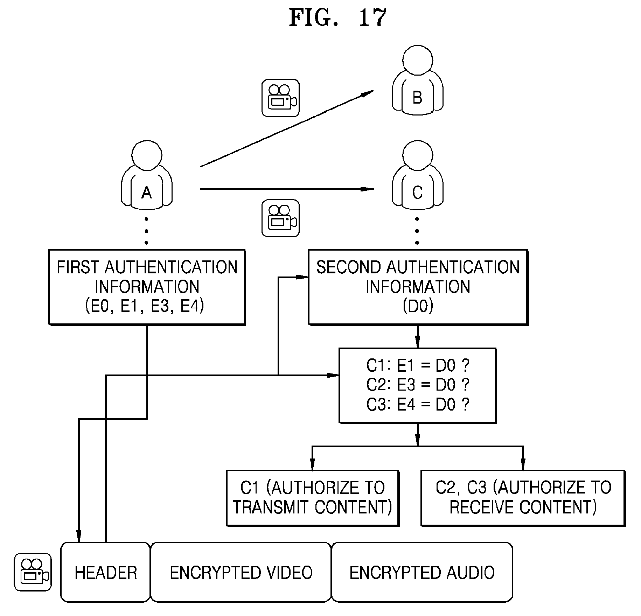

FIG. 17 is a diagram for explaining a content security method according to an embodiment of the present invention. FIG. 17 will be explained on the assumption that a first electronic apparatus user A sets a plurality of authorized content receivers and transmits security content to second electronic apparatus users B and C.

Referring to FIG. 17, when a content receiver includes a plurality of receivers (e.g., a first receiver and a second receiver), the first electronic apparatus 101 may generate first authentication information including random number encryption information E0, transmitter encryption information E1, and receiver encryption information corresponding to each of the plurality of receivers (e.g., first receiver encryption information E3 and second receiver encryption information E4).

In this case, the first receiver encryption information E3 and the second receiver encryption information E4 may be generated by performing a mathematical operation on first receiver identification information and second receiver identification information in the same manner as that used to generate the receiver encryption information E2 described with reference to FIG. 3. Although two content receivers are set in FIG. 17 for convenience of description, the present invention is not limited thereto, and the first electronic apparatus 101 may generate receiver encryption information corresponding to each set content receiver.

The first electronic apparatus 101 may add the random number encryption information E0, the transmitter encryption information E1, the first receiver encryption information E3, and the second receiver encryption information E4 to a header of an encrypted content data packet and may transmit the content data packet to the second electronic apparatus 102.

The second electronic apparatus 102 may receive the content data packet, may obtain the generated first authentication information, and may compare the second authentication information D0 (e.g., electronic apparatus user encryption information) with part of the first authentication information to determine whether the second authentication information is the same as the part of the first authentication information. For example, when the second authentication information is the same as the transmitter encryption information E1 of the first authentication information (in a case C1 of FIG. 17), the second electronic apparatus 102 may be authorized to transmit content. When the second authentication information is the same as the first receiver encryption information E3 or the second receiver encryption information E4 of the first authentication information (in a case C2 or C3 of FIG. 17), the second electronic apparatus 102 may be authorized to receive content.

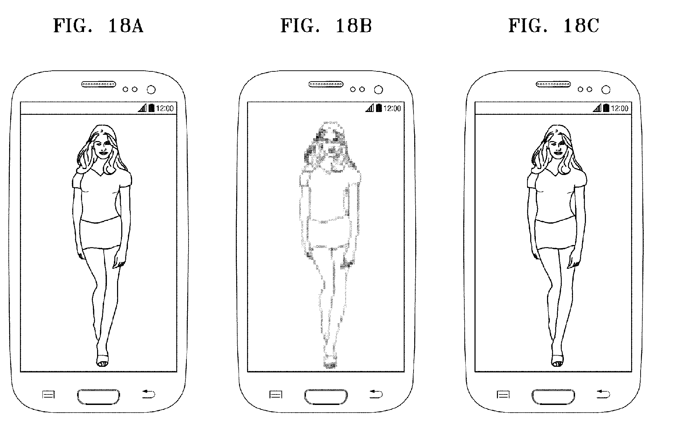

FIGS. 18A through 18C are views that are referred to when a content security method is described according to an embodiment of the present invention.

FIG. 18A illustrates original content. FIG. 18B illustrates content displayed on an electronic apparatus of an unauthorized user. FIG. 18C illustrates content displayed on an electronic apparatus of an authorized user. Although contents are image contents in FIGS. 18A through 18C, the present invention is not limited thereto.

For example, when a security message is generated in a first electronic apparatus according to an embodiment of the present invention and any one of transmitter identification information and receiver identification information is not the same as second electronic apparatus user identification information, a security key extracted by a second electronic apparatus may be different from a security key generated by the first electronic apparatus.

In this case, the second electronic apparatus 102 may display a modified image of an original image (i.e., an image of FIG. 18A) as shown in FIG. 18B. In this case, the modified image may be an image obtained by scrambling original image data. However, the present invention is not limited thereto, and the modified image may be any of images obtained by modifying the original image data in various ways.

In contrast, when a security message is generated in the first electronic apparatus 101 and any one of the transmitter identification information and the receiver identification information is the same as the second electronic apparatus user identification information, the security key extracted by the second electronic apparatus 102 may be the same as the security key generated by the first electronic apparatus 101, and thus the second electronic apparatus 102 may decrypt and display an encrypted image as shown in FIG. 18C.

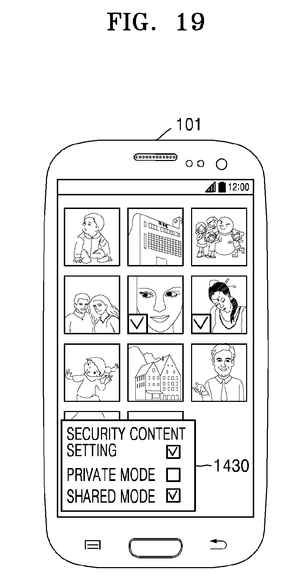

FIG. 19 is a view for explaining a method of setting security content according to an embodiment of the present invention.

Referring to FIG. 19, a first electronic apparatus user may select content based on a user input and may set the selected content as security content. The content may include text, an image, a video, an audio, or a moving image, and the first electronic apparatus user may select at least one content (e.g., an image) as shown in FIG. 19 and may select a security content setting in a menu list 1430.

Also, the first electronic apparatus user may select at least one of a private mode and a shared mode in the menu list 1430.

When the private mode is selected, the first electronic apparatus 101 may generate a security key and may generate a security message based on the generated security key and first electronic apparatus user identification information. Also, the first electronic apparatus 101 may generate the security content by encrypting the selected content and may store the security message and the security content in a security memory.

In contrast, when the shared mode is selected, the first electronic apparatus 101 may select a user electronic apparatus that is to share the security content and may generate the security message by using the first electronic apparatus user identification information, selected electronic apparatus user identification information, and the security key (referred to as a first security key). Also, the first electronic apparatus 101 may generate the security content by encrypting the selected content and may transmit the security message and the security content to an external electronic apparatus.

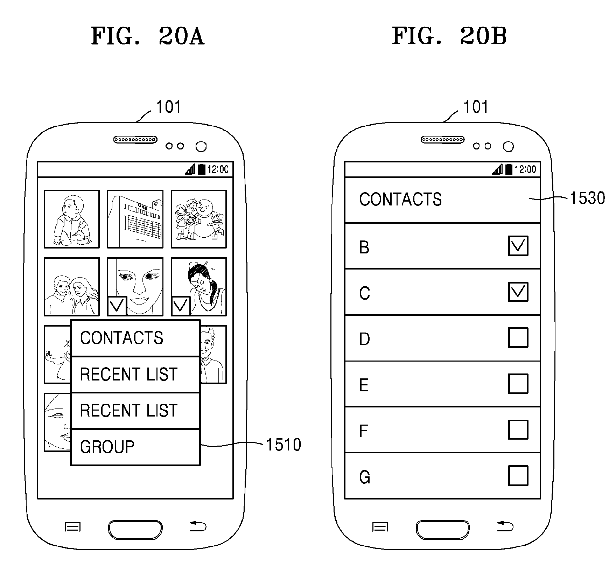

The shared mode will now be explained in detail with reference to FIGS. 20A through 23C.

FIGS. 20A through 23C are each a view for explaining a method of sharing security content according to an embodiment of the present invention.

When a shared mode is selected, a first electronic apparatus user may select a user electronic apparatus that is to share security content by using at least one of contacts, a recent list, favorites, and a group.

For example, as shown in FIG. 20A, the first electronic apparatus 101 may display a menu 1510 including the contacts, the recent list, the favorites, and the group.

In this case, when the first electronic apparatus user selects the contacts, as shown in FIG. 20B, the first electronic apparatus may execute an application including the contacts and may display a contact list 1530 including user identification information corresponding to an external electronic apparatus user. Accordingly, the first electronic apparatus user may select a user who is to share the security content by using the contact list 1530.

Also, when the first electronic apparatus user selects the recent list, the first electronic apparatus 101 may display a list of external electronic apparatuses that have recently been contacted or have recently shared or transmitted the security content. Accordingly, when the first electronic apparatus user is to share the security content with users of the external electronic apparatuses that have recently been contacted or have recently shared or transmitted the security content, the first electronic apparatus user may select the users who are to share the security content by using the recent list.

Also, when the first electronic apparatus user selects the favorites, the first electronic apparatus 101 may display a list of external electronic apparatuses that are registered in the favorites. In this case, the favorites refer to external electronic apparatuses that are frequently contacted by the first electronic apparatus, or frequently share or transmit the security content. Accordingly, when the first electronic apparatus user is to share the security content with users of the external electronic apparatuses that frequently share the security content, the first electronic apparatus user may select the electronic apparatuses that are to share the security content.

Also, when the first electronic apparatus user selects the group, the first electronic apparatus 101 may display a group list. In this case, the group refers to a set of external electronic apparatus users that are classified according to set categories, for example, a family, a school, an office, or a friend. Accordingly, the first electronic apparatus user may select an electronic apparatus that is to share the security content by selecting a group in which an external electronic apparatus user who is to share the security content is included.

Alternatively, the first electronic apparatus 101 may display a list of users whose security content rights are terminated.

Alternatively, the first electronic apparatus 101 may display a list of electronic apparatuses that exist within a preset distance from the first electronic apparatus 101. For example, the first electronic apparatus 101 may recognize a distance from an external electronic apparatus by using short-range wireless communication and may display a list of electronic apparatuses that exist within a preset distance.

When the user electronic apparatus that is to share the security list is selected in a list, the first electronic apparatus 101 may generate a security message by using a generated security key (referred to as a first security key) and user identification information of the electronic apparatus and may generate the security content by encrypting selected content.

For example, as shown in FIG. 20B, when the first electronic apparatus user selects a second electronic apparatus user B and a third electronic apparatus user C in the contact list, the first electronic apparatus 101 may generate the security message by using first electronic apparatus user identification information (referred to as transmitter identification information), second and third electronic apparatus user identification information (referred to as receiver identification information), and the generated security key (referred to as the first security key) and may generate the security content by encrypting the selected content.

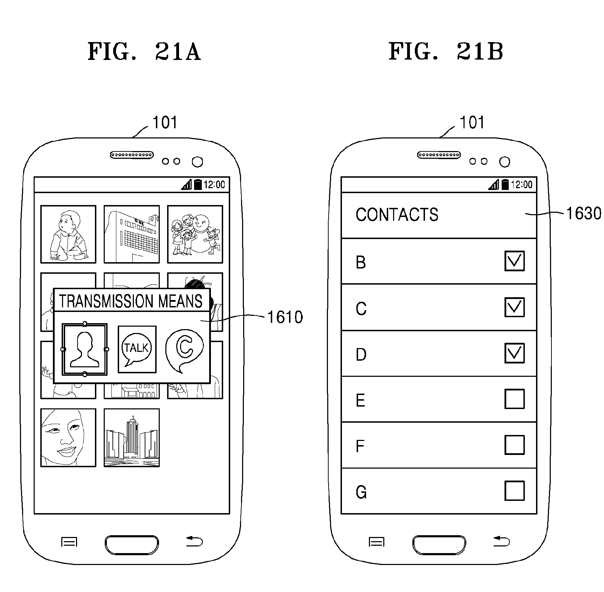

The first electronic apparatus 101 may transmit the security content to an external electronic apparatus. Referring to FIG. 21A, the first electronic apparatus 101 may display a menu 1610 for selecting transmission means via which the security content is transmitted, and the first electronic apparatus user may select the transmission means and may transmit the security content to the external electronic apparatus. For example, the first electronic apparatus 101 may transmit the security content to the external electronic apparatus by using a messaging service, an e-mail service, a social network service, a Wi-Fi direct service, a Bluetooth service, an infrared communication service, or a cloud service.

As shown in FIG. 21A, when the first electronic apparatus user selects the transmission means for transmitting the security content, the first electronic apparatus 101 may execute an application corresponding to the selected transmission means and may display a list 1630 including external electronic apparatus user identification information as shown in FIG. 21B.

Accordingly, the first electronic apparatus user may select the external electronic apparatus user identification information of an external electronic apparatus to which the security content is to be transmitted in the displayed list and may transmit the security content to the selected external electronic apparatus.

For example, as shown in FIG. 21B, when the first electronic apparatus user selects a second electronic apparatus user B, a third electronic apparatus user C, and a fourth electronic apparatus user D in the contact list, the first electronic apparatus 101 may transmit the security content to a second electronic apparatus, a third electronic apparatus, and a fourth electronic apparatus.

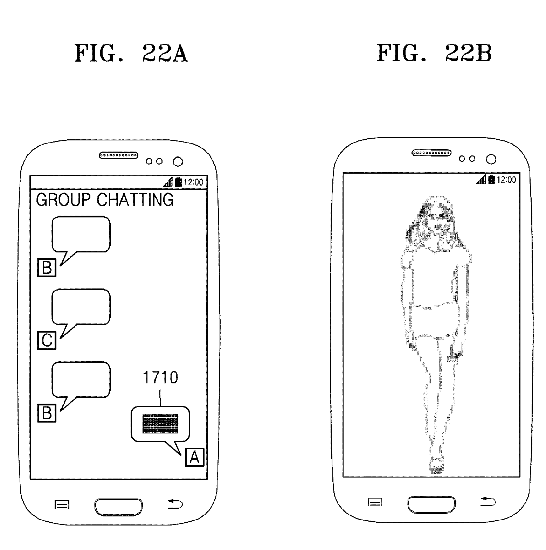

FIG. 22A is a view illustrating a screen when a first electronic apparatus user A shares security content 1710 with external electronic apparatus users B, C, and D who participate in a group chatting event by using a social network service.

For example, the first electronic apparatus user A may transit the security content 1710 to the external electronic apparatus users B, C, and D who participate in the group chatting event, and in this case, may also transmit a security message.

In this case, the second electronic apparatus 102 may receive the security content and the security message from the first electronic apparatus 101 and may extract a security key (referred to as a second security key) from the security message based on second electronic apparatus user identification information, and a third electronic apparatus may receive the security content and the security message from the first electronic apparatus 101 and may extract a security key (referred o as a third security key) from the security message based on third electronic apparatus user identification information.

Also, a fourth electronic apparatus may receive the security content and the security message from the first electronic apparatus 101 and may extract a security key (referred to as a fourth security key) from the security message based on fourth electronic apparatus user identification information.

Since the first electronic apparatus 101 generates the security message based on the second electronic apparatus user identification information and the third electronic apparatus user identification information as described with reference to FIG. 20B, the second security key and the third security key extracted by the second electronic apparatus and the third electronic apparatus are the same as the first security key. Accordingly, the second electronic apparatus and the third electronic apparatus may decrypt and display the security content into original content.

In contrast, since the electronic apparatus 101 does not include the fourth electronic apparatus user identification information when generating the security message, the fourth security key extracted by the fourth electronic apparatus is different from the first security key. Accordingly, the fourth electronic apparatus may not decrypt the security content into the original content, and may display modified content or may not display the content as show in FIG. 22B.

The first electronic apparatus according to an embodiment of the present invention may simultaneously select a user electronic apparatus that is to share the security content and an external electronic apparatus to which the security content is to be transmitted.

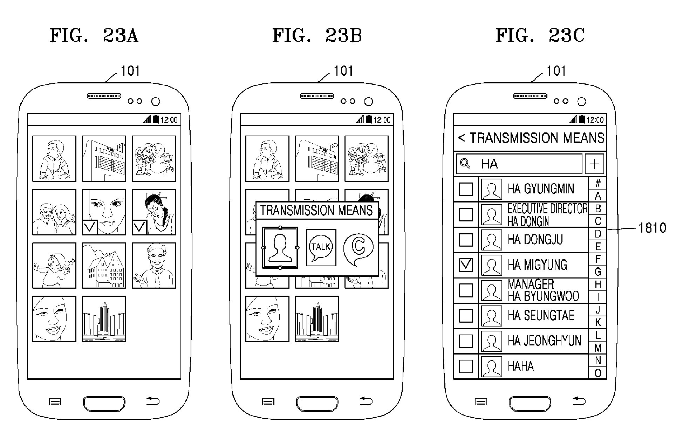

Referring to FIG. 23A, a first electronic apparatus user may select content that is to be set as security content.

Also, referring to FIG. 23B, the first electronic apparatus user may select transmission means for transmitting the security content. In this case, when the transmission means is selected, the first electronic apparatus 101 may execute an application corresponding to the selected transmission means and may display a list 1810 including external electronic apparatus user identification information as shown in FIG. 23C.

Accordingly, the first electronic apparatus user may select an external electronic apparatus user to which the security content is to be transmitted.

The first electronic apparatus 101 may generate a security message by using first electronic apparatus user identification information, selected external electronic apparatus identification information, and a generated security key, and may generate the security content by encrypting the selected content. Also, the first electronic apparatus 101 may transmit the security message and the security content to a selected external electronic apparatus.

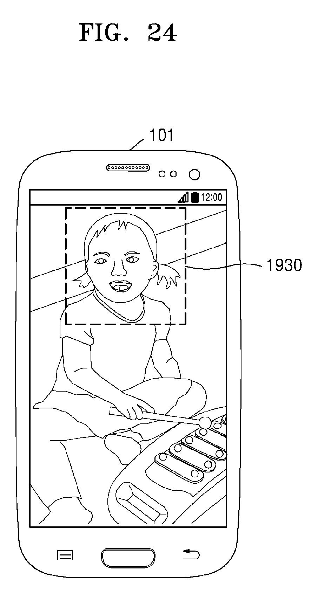

FIG. 24 is a view for explaining a method of setting a user who is recognized in image content as a user who is to share security content according to an embodiment of the present invention.

Referring to FIG. 24, the first electronic apparatus 101 may display image content. In this case, the displayed image content may be an image captured by the first electronic apparatus 101 or an image received from the outside.

Also, the displayed image content may include at least one user image 1930. The first electronic apparatus 101 may recognize the user image 1930 included in the image content and may tag user identification information to the image content. The user identification information may include at least one of a user's telephone number, e-mail address, and ID, a pre-shared key, pre-shared identification information, and information used for a pre-shared identification information generation algorithm.

When the first electronic apparatus 101 receives a user input for setting the displayed image content as security content, the first electronic apparatus 101 may generate a security key.

For example, the first electronic apparatus 101 may generate the security key by generating a random number, or may generate the security key by combining first electronic apparatus user identification information and the user identification information tagged to the image content. The first electronic apparatus 101 may generate the security key by performing a mathematical operation on the first electronic apparatus user identification information and the user identification information tagged to the image content.

Also, the first electronic apparatus 101 may generate a security message including the security key. In this case, the first electronic apparatus 101 may generate the security message by encrypting the security key, the first electronic apparatus user identification information, and the user identification information tagged to the image content, or may generate the security message by combining the security key, the first electronic apparatus user identification information, and the user identification information tagged to the image content.

Also, the first electronic apparatus 101 may generate the security content by encrypting the image content and may transmit the generated security message and the security content to an external electronic apparatus.

Accordingly, when a user electronic apparatus (referred to as a second electronic apparatus) tagged to the image content receives the security content and the security message, the user electronic apparatus may extract the security key from the security message based on second electronic apparatus user identification information, and may decrypt and display the security content into original content by using the extracted security key.

The first electronic apparatus according to an embodiment of the present invention may set a scramble type of the security content and a right to the security content as well as a user who is to share the security content, when setting the security content.

The right to the security content may include a period for which the security content is used, the number of times the security content is used, a position where the security content is used, a right to re-transmit the security content, and whether to output the security content to the outside.

For example, the first electronic apparatus 101 may set a period for which the security content is used based on a user input. In this case, the first electronic apparatus 101 may set the period so that the security content may be decrypted into the original content only for a predetermined period from a time when the security content is shared or may set a start time and an end time for which the security content may be used and may allow the security content to be decrypted into the original content only for a period from the start time to the end time.

Also, the first electronic apparatus 101 may determine the number of times the security content is used based on a user input. In this case, when the security content is used, it may include, but not limited to, cases where the security content is generated, encrypted, decrypted, reproduced, transmitted, and edited. Accordingly, the first electronic apparatus may set the number of times so that the security content may be used only a preset number of times.

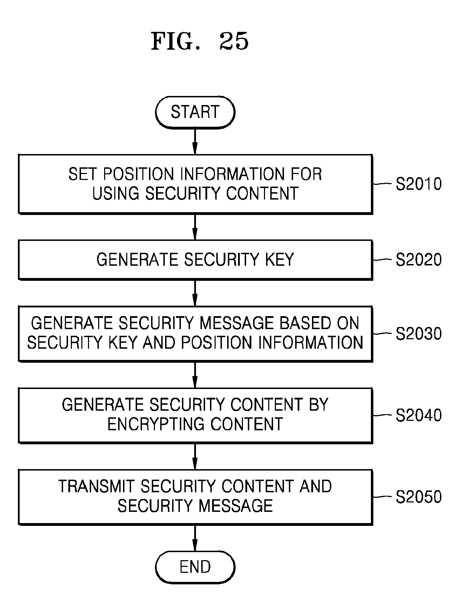

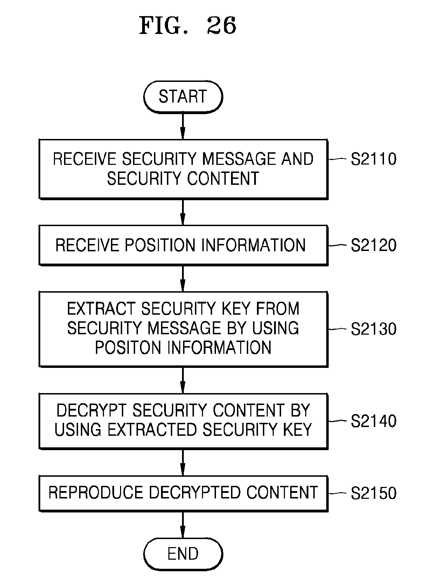

Also, the first electronic apparatus 101 may set a position where the security content is used based on a user input. Accordingly, the first electronic apparatus 101 may set the position so that the security content may be decrypted into the original content within the set position, which will be explained below in detail with reference to FIGS. 25 and 26.

Also, the first electronic apparatus 101 may set a right to re-transmit the security content. When the right to re-transmit the security content is granted, a user who shares the security content may share or transmit again the security content with or to an external electronic apparatus user. In contrast, when the right to re-transmit the security content is not granted, the user who shares the security content may not share or transmit again the security content with or to the external electronic apparatus user.

Also, the first electronic apparatus 101 may set the number of times the security content may be re-transmitted and whether to correct the security content during the re-transmission, and may set the number of times and whether to correct the security content so that the security content may be corrected only within a limited range.

Also, the first electronic apparatus 101 may set whether to output the security content to the outside. When the security content is allowed to be output to the outside, the user who shares the security content may decrypt the security content into the original content and may output the decrypted original content to an external device such as a TV or a monitor. In contrast, when the security content is not allowed to be output to the outside, the user who shares the security content may not output the decrypted original content to the external device.

Also, the first electronic apparatus 101 may set the security content so that only when the number of sharers who each have a right to share the security content is equal to or greater than a predetermined number, the security content may be decrypted into the original content.

The right to the security content may be preset, without being set whenever the security content is shared, and may be set to vary according to a user who is to share the security content, and a right that has recently been set may be automatically set for the security content.

The first electronic apparatus 101 may set a method of encrypting the security content.

The first electronic apparatus 101 may set a scramble type of the security content and may generate the security content by scrambling the content according to the set type. For example, the first electronic apparatus 101 may process the selected content in black and white (black and white scrambling) or may mosaic the selected content (mosaic scrambling) according to the set scramble type. Alternatively, the first electronic apparatus 101 may divide the selected content into a grid including horizontal and vertical lines and display lines on a specific column as one block or display vertical lines on a specific row as one block (block scrambling, and may gray a specific portion of the selected content (noise scrambling).

Also, the first electronic apparatus 101 may set the scramble type according to a user who is to share the security content. For example, the first electronic apparatus 101 may set the scramble type according to the reliability of the user who is to share the security content or a group including the user who is to share the security content.

The first electronic apparatus 101 may set a scramble level of the security content and may generate the security content by scrambling the content according to the set level.

The scramble level may refer to a degree to which scrambled content is modified. For example, modification degrees of first security content obtained by scrambling the original content to a first level and second security content obtained by scrambling the original content to a second level may be different from each other, and the modification degree of the second security content obtained by scrambling the original content at the second level may be greater than that of the first security content.

Also, the first electronic apparatus 101 may set the scramble level according to the user who is to share the security content. For example, the first electronic apparatus 101 may set the scramble level according to the reliability of the user who is to share the security content and the group including the user who is to share the security content.

Also, the second electronic apparatus 102 having received the scrambled security content may decrypt the received security content to the set scramble level. For example, when the second electronic apparatus 102 whose scramble level is set to a first level receives the security content that is scrambled to the second level, the second electronic apparatus 102 may decrypt the security content to the first level.

Also, when the selected content is a video or an audio, the first electronic apparatus 101 may select a specific section of the video or the audio and may decrypt only the selected section.

Also, the first electronic apparatus 101 may encrypt the content so that only part of the content is modified and displayed. For example, when the selected content is an image or a video, the first electronic apparatus 101 may encrypt the selected content so that only the face of a specific person is modified and displayed or a specific object such as a specific stuff or a logo is modified and displayed. Also, when a plurality of people or objects are included in one image or a video, the first electronic apparatus 101 may encrypt each person or each object by using each different method.

FIGS. 25 and 26 are each a flowchart for explaining a content security method according to an embodiment of the present invention. FIG. 25 is a flowchart of an operation of the first electronic apparatus that transmits security content. FIG. 26 is a flowchart of an operation of the second electronic apparatus that receives security content.

Referring to FIG. 25, in operation S2010, the first electronic apparatus 101 may set a position where security content is used. In this case, the first electronic apparatus may set position information about a position where the security content may be decrypted into original content based on a user input.

In this case, the first electronic apparatus 101 may set the position information as physical position information expressed with longitude, latitude, and altitude information.

The first electronic apparatus 101 according to an embodiment of the present invention may set a position where content is generated as the position where the security content is used. For example, when image content captured by the first electronic apparatus 101 is set as the security content, the first electronic apparatus 101 may set position information about a position where the image content is captured as the position where the security content is used.

In operation S2020, the first electronic apparatus 101 may generate a security key. For example, the first electronic apparatus 101 may generate the security key by generating a random number, or may generate the security key by performing a mathematical operation on the position information about the position where the security content is used (e.g., position information about the position where the content is generated).

In operation S2030, the first electronic apparatus 101 may generate a security message including the security key.

For example, the first electronic apparatus 101 may generate the security message by encrypting the security key and the set position information, or may generate the security message by combining the security key and the set position information. In this case, the first electronic apparatus 101 may generate the security message by performing a mathematical operation on the security key and the set position information, and examples of the mathematical operation may include, but not limited to, a hash function (e.g., SHA or MD5), an XOR operation, an arithmetic operation, and a shuffling operation.

Also, the first electronic apparatus 101 may generate the security message by encrypting transmitter identification information and receiver identification information as well as the security key and the set position information, or may generate the security message by combining the security key, the set position information, the transmitter identification information, and the receiver identification information.

In operation S2040, the first electronic apparatus 101 may generate the security content by encrypting the content. In operation S2050, the first electronic apparatus 101 may transmit the security message and the security content to the second electronic apparatus 102.

For example, the first electronic apparatus 101 may transmit the security message and the security content to the second electronic apparatus 102, or may transmit the security content to which the security message is added to the second electronic apparatus 102.

Accordingly, a first electronic apparatus user may set the security content that the security content may be decrypted into the original content only in a specific place.

Referring to FIG. 26, in operation S2110, the second electronic apparatus 102 may receive the security message and the security content.

Operation S2110 corresponds to operation S610 of FIG. 9, and thus a repeated explanation thereof will not be given.

Also, in operation S2120, the second electronic apparatus 102 may receive position information about the second electronic apparatus. For example, the second electronic apparatus 102 may detect the position information of the second electronic apparatus 102 by using a position sensor included in the second electronic apparatus 102. Examples of the position sensor may include a GPS, a gyro sensor, an acceleration sensor, and an altitude sensor.

In this case, the position information may include geometrical position information expressed with longitude, latitude, and altitude information. Also, the position information may include contextual position information.

The contextual position information may include position information of the second electronic apparatus 102 recognized by using AP information, Wi-Fi information, inlet/outlet information of a specific place, and beacon information.

When the second electronic apparatus 102 is connected to a specific AP, the second electronic apparatus 102 may recognize a position of the second electronic apparatus 102 by using a position of the AP. For example, when the AP is located in a home, the second electronic apparatus 102 may recognize a position of the second electronic apparatus 102 as the home, and when the AP is located in an office, the second electronic apparatus 102 may recognize a position of the second electronic apparatus 102 as the office.

Also, the second electronic apparatus 102 may also recognize geometrical position information (e.g., position information expressed with longitude, latitude, and altitude information) of the second electronic apparatus 102 by using geometrical position information of the home or the office.

The second electronic apparatus 102 may recognize a position of the second electronic apparatus 102 by using a radio fingerprint-based Wi-Fi positioning system (WPS). For example, the second electronic apparatus 102 may recognize a position of the second electronic apparatus 102 by measuring a Wi-Fi signal intensity from an AP.

In operation S2130, the second electronic apparatus 102 may extract the security key from the received security message by using the position information of the second electronic apparatus 102.

For example, in operation S2140, the second electronic apparatus 102 may extract the security key from the security message by performing any of various mathematical operations on the position information of the second electronic apparatus 102 and the security message, and may decrypt the received security content.

In this case, when the extracted security key is the same as the security key that is generated in operation S2020, the second electronic apparatus may decrypt the security content into the original content. In contrast, when the extracted security key is different from the security key generated in operation S2020, the second electronic apparatus may not decrypt the security content into the original content.

For example, when the position information set by the first electronic apparatus user in operation S2010 is the same as the position information of the second electronic apparatus 102, the second electronic apparatus 102 may extract the security key that is the same as the security key generated in operation S2020 from the received security message. In contrast, when the position information set by the first electronic apparatus user in operation S2010 is different from the position information of the second electronic apparatus 102, the second electronic apparatus may not extract the security key that is the same as the security key generated in operation S2020 from the received security message.

Also, in operation S2150, the second electronic apparatus 102 may reproduce the decrypted content.

Operation S2150 corresponds to operation S640 of FIG. 9, and thus a repeated explanation thereof will not be given.

According to another embodiment of the present invention, when the position information set by the first electronic apparatus user is different from the position information of the second electronic apparatus 102, the second electronic apparatus 102 may not extract the security key from the received security message and may not decrypt the received security content.

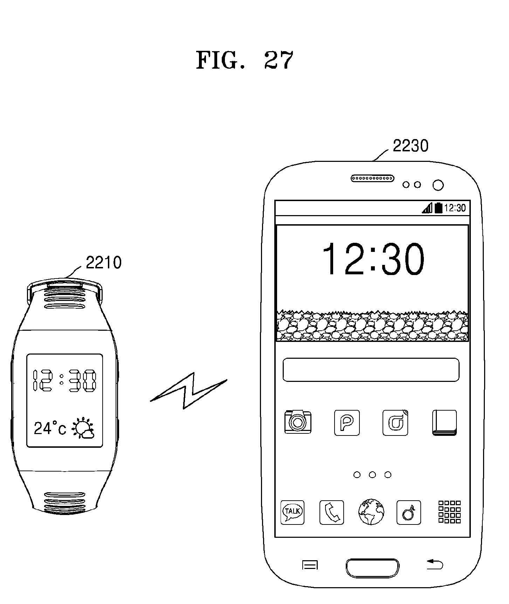

FIG. 27 is a view for explaining a method of setting security content in a wearable device 2210 according to an embodiment of the present invention.

Referring to FIG. 27, examples of the wearable device 2210 according to an embodiment of the present invention may include a watch, a band, and a bracelet that may be worn on a user's wrist. However, the present invention is not limited thereto, and the examples of the wearable device 2210 may include glasses, a helmet, a hat, a ring, shoes, earrings, a hair band, clothing, gloves, and a thimble.

The wearable device 2210 according to an embodiment of the present invention may communicate with an external electronic apparatus 2230. For example, the wearable device 2210 may transmit or receive data to or from the external electronic apparatus 2230 by using short-range communication. In this case, examples of the short-range communication may include, but not limited to, Wi-Fi, NFC, Bluetooth, infrared, and ZigBee.

Also, the wearable device 2210 according to an embodiment of the present invention may transmit user authentication information or device identification information of the wearable device 22110 to the external electronic apparatus 2230, and the external electronic apparatus 2230 may transmit user authentication information or electronic apparatus identification information to the wearable device 2210.

In this case, the user authentication information may include a user ID, a user password, and a user account. Also, the device identification information or the electronic apparatus identification information that is unique information for distinguishing a device from another device may include, for example, a device model name and a device serial number.

The wearable device 2210 and the external electronic apparatus 2230 according to an embodiment of the present invention may interoperate with each other. For example, the external electronic apparatus 2230 may store the user identification information or the device identification information of the wearable device and may register the wearable device 2210 to the external electronic apparatus 2230.

Also, when the wearable device 2210 and the external electronic apparatus 2230 interoperate with each other, the same key may be generated in the wearable device 2210 and the external electronic apparatus 2230.

Accordingly, when the wearable device 2210 sets selected content as security content based on a user input, the wearable device 2210 may generate a security key based on identification information of the wearable device 2210, identification information of the external electronic apparatus 2230 interoperated with the wearable device 2210, or a key value generated during interoperation between the wearable device 2210 and the external electronic apparatus 2230.

Alternatively, the wearable device 2210 may generate a security message based on the generated security key, the identification information of the wearable device 2210, the identification information of the external electronic apparatus 2230 interoperated with the wearable device 2210, or the key value generated during interoperation between the wearable device 2210 and the external electronic apparatus 2230.

Also, the wearable device 2210 may generate the security content by encrypting the selected content and may transmit the security message and the security content to the external electronic apparatus 2230 interoperated with the wearable device.

In this case, the external electronic apparatus 2230 may extract the security key from the security message received from the wearable device 2210 by using the external electronic apparatus identification information or the key value generated during interoperation between the wearable device 2210 and the external electronic apparatus 2230.

Also, the external electronic apparatus 2230 may decrypt the received security content into original content by using the extracted security key.

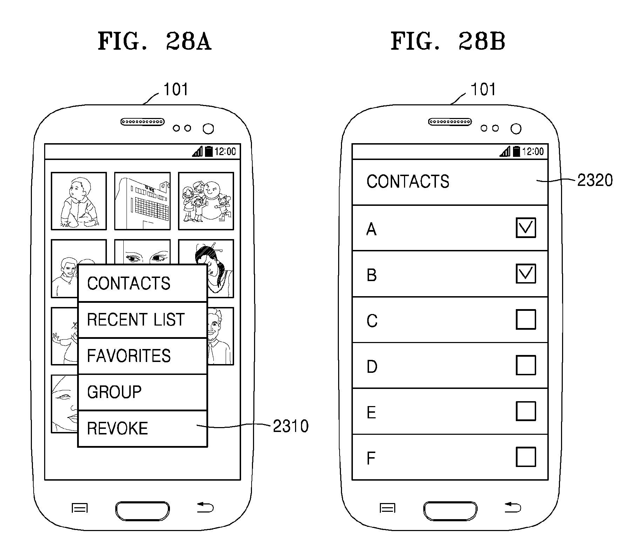

FIGS. 28A and 28B are views for explaining a method of revoking security content shared by an electronic apparatus according to an embodiment of the present invention.

Referring to FIGS. 28A and 28B, the first electronic apparatus 101 may display a security content list and may receive a user input that selects at least one security content in the security content list.

When the security content is selected, the first electronic apparatus 101 may display a menu including a revoke 2310. When the revoke 2310 is selected, the first electronic apparatus 101 may display a user list 2320 corresponding to users of external electronic apparatuses that share the selected security content. The first electronic apparatus 101 may receive a user input that selects at least one user who is to revoke the shared security content in the user list.

The first electronic apparatus 101 may revoke the security content that is shared by the external electronic apparatuses through a server or may directly transmit a revoke command to the external electronic apparatuses.

For example, when the first electronic apparatus 101 revokes the security content that is shared by the external electronic apparatuses through the server, the first electronic apparatus 101 may transmit selected user identification information and selected security content information to the server.

Accordingly, the server may transmit a command to revoke the security content to an external electronic apparatus (e.g., the second electronic apparatus) corresponding to the received user identification information, and the second electronic apparatus 102 having received the command to revoke the security content may delete the security content and a right to the security content.

When the first electronic apparatus 101 directly transmits a revoke command to the external electronic apparatus, the first electronic apparatus 101 may transmit the command to revoke the selected security content to the external electronic apparatus (e.g., the second electronic apparatus) corresponding to the selected user identification information, and the second electronic apparatus 102 having received the revoke command may delete the security content and the right to the security content.

A content security method according to an embodiment of the present invention may include generating a security key used to decrypt security content, generating a security message based on the security key, content transmitter identification information, and content receiver identification information, generating the security content by encrypting content, and transmitting the security content and the security message to an external electronic apparatus.

The transmitter identification information and the receiver identification information according to an embodiment of the present invention may include at least one of a telephone number, an e-mail address, an ID, a pre-shared key, pre-shared identification information, and information used for a pre-shared identification information generation algorithm. The generating of the security message according to an embedment of the present invention may include generating the security message by performing a mathematical operation on the security key, the transmitter identification information, and the receiver identification information.

The content security method according to an embodiment of the present invention may further include adding the security message to the security content.

The content security method according to an embodiment of the present invention may further include receiving the content receiver identification information, and the transmitting of the security content and the security message to the external electronic apparatus may include transmitting the security content and the security message to an electronic apparatus corresponding to the content receiver identification information.

The content security method according to an embodiment of the present invention may further include setting position information for decrypting the security content into original content, and the generating of the security message may include generating the security message based on the security key and the set position information. The setting of the position information according to an embodiment of the present invention may include setting position information about a position where the content is generated as the position information for decrypting the security content into the original content.

The content security method according to an embodiment of the present invention may further include recognizing a user image included in the content, and the generating of the security message may include generating the security message based on the security key and user identification information corresponding to the recognized user image.

The generating of the security message according to an embodiment of the present invention may include generating the security message based on the user identification information tagged to the content.

The content security method according to an embodiment of the present invention may further include setting period information about a period for which the security content is shared, and the generating of the security message may include generating the security message based on the security key and the set period information.

A content security method according to an embodiment of the present invention may include obtaining a security message and security content in an electronic apparatus, extracting a security key based on the security message and user identification information of the electronic apparatus, and decrypting the security content based on the extracted security key.

The user identification information of the electronic apparatus according to an embodiment of the present invention may include at least one of a telephone number, an e-mail address, an ID, a pre-shared key, pre-shared identification information, and information used for a pre-shared identification information generation algorithm.

The obtaining of the security message according to an embodiment of the present invention may include receiving the security content to which the security message is added, and the obtaining of the security message may further include extracting the security message from the content to which the security message is added.

The extracting of the security key according to an embodiment of the present invention may include extracting the security key by performing a mathematical operation on the security message and the user identification information.

The content security method according to an embodiment of the present invention may further include receiving position information of the electronic apparatus, and the extracting of the security key may include extracting the security key based on the security message and the position information of the electronic apparatus.

The content security method according to an embodiment of the present invention may further include receiving current time information, and the extracting of the security key may include extracting the security key based on the security message and the current time information.

According to an embodiment of the present invention, since content may be provided only to an authorized user, content security may be strengthened. Also, since transmitter identification information and receiver identification information are not directly perceived, content security may be strengthened. Also, since authentication information is added by correcting only a header area of an existing content data packet, a format of the existing content data packet may still be used.

A content security method and an electronic apparatus for providing a content security function according to various embodiments of the present invention are not limited to configurations and methods of the afore-described embodiments, and the embodiments may be modified by selectively combining all or some of the embodiments.

The term "module" used in various embodiments of the present invention may refer to, for example, a unit including one or more combinations of hardware, software, and firmware. The "module" may be interchangeable with a term, such as "unit," "logic," "logical block," "component," "circuit," or the like. The "module" may be a minimum unit of a component formed as one body or a part thereof. The "module" may be a minimum unit for performing one or more functions or a part thereof. The "module" may be implemented mechanically or electronically. For example, the "module," according to various embodiments of the present invention may include at least one of an Application-Specific Integrated Circuit (ASIC), a Field-Programmable Gate Array (FPGA), and a programmable-logic device for performing certain operations which have been known or are to be developed in the future.

According to various embodiments, at least a part of a device (e.g., modules or functions thereof) or a method (e.g., operations) according to various embodiments of the present invention may be embodied with an instruction stored in non-transitory computer-readable storage media in, for example, a programming module form. When the instruction is executed by at least one processor, the at least one processor may perform a function corresponding to the instruction. The computer-readable storage media may be, for example, the memory 330. At least a part of the programming module may be implemented (e.g., executed) by, for example, the processor. At least a part of the programming module may include, for example, a module, a program, a routine, a set of instructions, or a process for performing at least one function.

The computer-readable storage media may include magnetic media such as a hard disk, a floppy disk, and a magnetic tape, optical media such as a Compact Disc Read Only Memory (CD-ROM) and a Digital Versatile Disc (DVD), magneto-optical media such as a floptical disk, and a hardware device, specially configured to store and perform a program instruction (e.g., a programming module), such as a ROM, a RAM, or a flash memory. Further, a program instruction may include a high-level language code that may be executed by a computer using an interpreter as well as a machine language code generated by a compiler. The program instruction may include an instruction implemented in the form of a carrier wave such as transmission via the Internet. A processor-readable recording medium may be distributed among computer systems that are interconnected through a network, and processor-readable code that may be read in a distributed fashion may be stored and executed. In order to perform operations of various embodiments of the present invention, the above-described hardware device may be configured to operate as at least one software module, and vice versa.

A module or a programming module according to various embodiments of the present invention may include at least one of the foregoing constituent elements, may omit some constituent elements, or may further include an additional constituent element. Operations performed by a module, a programming module, or another constituent element according to various embodiments of the present invention may be executed by using a sequential, parallel, repeated, or heuristic method. Further, some operations may be executed in different orders, may be omitted, or may add other operations.

According to various embodiments, in a storage medium that stores instructions, when the instructions are executed by at least one processor, the at least one processor may perform at least one operation, and the at least one operation may include generating a security key used to decrypt security content, generating a security message based on the security key, content transmitter identification information, and content receiver identification information, generating the security content by encrypting content, and transmitting the security content and the security message to an external electronic apparatus.

Also, the at least one operation may include obtaining a security message and security content in an electronic apparatus, extracting a security key based on the security message and user identification information of the electronic apparatus, and decrypting the security content based on the extracted security key.

While various embodiments of the present invention have been shown and described with reference to various embodiments thereof, it will be understood by one of ordinary skill in the art that various changes in form and details may be made therein without departing from the spirit and scope of the present invention as defined by the appended claims and their equivalents and should not be individually understood from the technical spirit or prospect of the present invention.

## Claims

1. A content security method comprising:
generating a security key used to decrypt security content;
generating a security message based on the security key, content transmitter identification information, and content receiver identification information;
generating the security content by encrypting content; and
transmitting the security content and the security message to an external electronic apparatus.

2. The content security method of claim 1, wherein each of the content transmitter identification information and the content receiver identification information comprises at least one of a telephone number, an e-mail address, an identifier (ID), a pre-shared key, pre-shared identification information, and information used for a pre-shared identification information generation algorithm.

3. The content security method of claim 1, wherein the generating of the security message comprises generating the security message by performing a mathematical operation on the security key, the content transmitter identification information, and the content receiver identification information.

4. The content security method of claim 1, further comprising adding the security message to the security content.

5. The content security method of claim 1, further comprising receiving the content receiver identification information,
wherein the transmitting of the security content and the security message to the external electronic apparatus comprises transmitting the security content and the security message to an electronic apparatus corresponding to the content receiver identification information.

6. The content security method of claim 1, further comprising setting position information for decrypting the security content into original content,
wherein the generating of the security message comprises generating the security message based on the security key and the position information.

7. The content security method of claim 6, wherein the setting of the position information comprises setting position information about a position where the content is generated as the position information for decrypting the security content into the original content.

8. The content security method of claim 1, wherein the generating of the security message comprises generating the security message based on the security key and user identification information corresponding to a user image included in the content.

9. The content security method of claim 1, wherein the generating of the security message comprises generating the security message based on user identification information tagged to the content.

10. The content security method of claim 1, further comprising setting period information about a period during which the security content is shared,
wherein the generating of the security message comprises generating the security message based on the security key and the period information.

11. A content security method comprising:
obtaining, in an electronic apparatus, a security message and security content;
extracting a security key based on the security message and user identification information of the electronic apparatus; and
decrypting the security content based on the extracted security key.

12. The content security method of claim 11, wherein the user identification information comprises at least one of a telephone number, an e-mail address, an identifier (ID), a pre-shared key, pre-shared identification information, and information used for a pre-shared identification information generation algorithm.

13. The content security method of claim 11, wherein the obtaining of the security content comprises receiving the security content to which the security message is added and the obtaining of the security message further comprises extracting the security message from the security content to which the security message is added.

14. The content security method of claim 11, wherein the extracting of the security key comprises extracting the security key by performing a mathematical operation on the security message and the user identification information.

15. The content security method of claim 11, further comprising receiving position information of the electronic apparatus,
wherein the extracting of the security key comprises extracting the security key based on the security message and the position information of the electronic apparatus.

16. The content security method of claim 11, further comprising receiving current time information,
wherein the extracting of the security key comprises extracting the security key based on the security message and the current time information.

17. An electronic apparatus for providing a content security function, the electronic apparatus comprising:
an authentication controller configured to generate a security key used to decrypt security content and generate a security message based on the security key, content transmitter identification information, and content receiver identification information;
a security encoder configured to generate the security content by encrypting content; and
a communicator configured to transmit the security content and the security message to an external electronic apparatus.

18. The electronic apparatus of claim 17, wherein each of the content transmitter identification information and the content receiver identification information comprises at least one of a telephone number, an e-mail address, an identifier (ID), a pre-shared key, pre-shared identification information, and information used for a pre-shared identification information generation algorithm.

19. The electronic apparatus of claim 17, wherein the authentication controller generates the security message by performing a mathematical operation on the security key, the content transmitter identification information, and the content receiver identification information.

20. The electronic apparatus of claim 17, wherein the security encoder adds the security message to the security content.

21. The electronic apparatus of claim 17, further comprising an input device configured to receive the content receiver identification information,
wherein the communicator transmits the security content and the security message to an electronic apparatus corresponding to the content receiver identification information.

22. The electronic apparatus of claim 17, wherein the authentication controller sets position information for decrypting the security content into original content and generates the security message based on the security key and the set position information.

23. The electronic apparatus of claim 22, wherein the authentication controller sets position information about a position where the content is generated as the position information for decrypting the security content into the original content.

24. The electronic apparatus of claim 17, wherein the authentication controller recognizes a user image included in the content and generates the security message based on the security key and user identification information corresponding to the recognized user image.

25. The electronic apparatus of claim 17, wherein the authentication controller generates the security message based on user identification information tagged to the content.

26. The electronic apparatus of claim 17, wherein the authentication controller sets period information about a period during which the security content is shared and generates the security message based on the security key and the set period information.

27. An electronic apparatus for providing a content security function, the electronic apparatus comprising:
a communicator configured to receive a security message and security content;
an authentication controller configured to extract a security key based on the security message and electronic apparatus user identification information;
a security decoder configured to decrypt the security content based on the extracted security key; and
a content reproducer configured to reproduce the decrypted security content.

28. The electronic apparatus of claim 27, wherein the electronic apparatus user identification information comprises at least one of a telephone number, an e-mail address, an identifier (ID), a pre-shared key, pre-shared identification information, and information used for a pre-shared identification information generation algorithm.

29. The electronic apparatus of claim 27, wherein when the security content to which the security message is added is received, the security decoder extracts the security message from the security content.

30. The electronic apparatus of claim 27, wherein the authentication controller extracts the security key by performing a mathematical operation on the security message and the electronic apparatus user identification information.

31. The electronic apparatus of claim 27, wherein the authentication controller receives position information of the electronic apparatus and extracts the security key based on the security message and the position information of the electronic apparatus.

32. The electronic apparatus of claim 27, wherein the authentication controller receives current time information and extracts the security key based on the security message and the current time information.

33. A computer-readable recording medium having embodied thereon a program for executing a content security method,
wherein the content security method comprises:
generating a security key used to decrypt security content;
generating a security message based on the security key, content transmitter identification information, and content receiver identification information;
generating the security content by encrypting content; and
transmitting the security content and the security message to an external electronic apparatus.

34. A computer-readable recording medium having embodied thereon a program for executing a content security method,
wherein the content security method comprises:
obtaining, in an electronic apparatus, a security message and security content;
extracting a security key based on the security message and user identification information of the electronic apparatus; and
decrypting the security content based on the extracted security key.
